(19) **Europäisches Patentamt / European Patent Office / Office européen des brevets**

(11) **EP 3 308 104 B1**

(12) **FASCICULE DE BREVET EUROPEEN**

(45) Date de publication et mention de la délivrance du brevet:
**08.01.2020   Bulletin 2020/02**

(21) Numéro de dépôt: **16734426.6**

(22) Date de dépôt: **08.06.2016**

(51) Int Cl.:
**G01C 21/20** $^{(2006.01)}$    **G06F 1/32** $^{(2019.01)}$
**G06F 3/0346** $^{(2013.01)}$

(86) Numéro de dépôt international:
**PCT/FR2016/051365**

(87) Numéro de publication internationale:
**WO 2016/198786 (15.12.2016 Gazette 2016/50)**

(54) **PROCÉDÉ DE TRAITEMENT DES MESURES D'AU MOINS UN CAPTEUR ÉLECTRONIQUE LOGÉ DANS UN APPAREIL PORTABLE**

VERFAHREN ZUR VERARBEITUNG VON MESSUNGEN VON MINDESTENS EINEM ELEKTRONISCHEN SENSOR IN EINER TRAGBAREN VORRICHTUNG

METHOD FOR PROCESSING MEASUREMENTS OF AT LEAST ONE ELECTRONIC SENSOR PLACED IN A HANDHELD DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2015   FR 1555296**

(43) Date de publication de la demande:
**18.04.2018   Bulletin 2018/16**

(73) Titulaires:
- **Commissariat à l'énergie atomique et aux énergies alternatives 75015 Paris (FR)**
- **Movea 38000 Grenoble (FR)**

(72) Inventeur: **VILLIEN, Christophe 38170 Seyssinet-Pariset (FR)**

(74) Mandataire: **Colombo, Michel Innovation Competence Group 310, avenue Berthelot 69372 Lyon Cedex 08 (FR)**

(56) Documents cités:
**US-A1- 2012 254 878**

- **Julian Straub: "Pedestrian Indoor Localization and Tracking using a Particle Filter combined with a learning Accessibility Map", , 1 août 2010 (2010-08-01), pages 1-76, XP055168883, Extrait de l'Internet: URL:http://www.jstraub.de/download/Straub1 0PedestrianLocalization.pdf [extrait le 2015-02-10] cité dans la demande**
- **Ivan Spassov: "Algorithms for Map-Aided Autonomous Indoor Pedestrian Positioning and Navigation", , 23 novembre 2007 (2007-11-23), XP055022079, Extrait de l'Internet: URL:http://biblion.epfl.ch/EPFL/theses/200 7/3961/EPFL_TH3961.pdf [extrait le 2012-03-16] cité dans la demande**

Printed by Jouve, 75001 PARIS (FR)

**Description**

L'invention concerne un procédé de traitement des mesures d'au moins un capteur électronique logé dans un appareil portable par un utilisateur afin d'en déduire les valeurs d'une donnée à des instants successifs. L'invention a également pour objet un support d'enregistrement d'informations, une unité électronique et un appareil pour la mise en œuvre de ce procédé.

Un tel procédé est connu de la demande US2012/254878A1. Le procédé de la demande US2012/254878A1 comporte :

- pendant une phase active :

  - un premier calculateur acquiert, à des instants $t_a$, les mesures dudit au moins un capteur électronique, puis établit, à chaque instant tk une mesure intermédiaire à partir des mesures acquises aux instants $t_a$, sur une même période de temps les instants $t_k$ étant moins nombreux que les instants $t_a$ de sorte que le premier calculateur réalise ainsi, pendant la phase active, une première compression des mesures dudit au moins un capteur,
  - à chaque instant $t_k$, un deuxième calculateur exécute un premier algorithme d'estimation d'une nouvelle valeur $P^i_k$ de la donnée, cette exécution comprenant :

    - la réception d'une nouvelle mesure intermédiaire établie par le premier calculateur pour cet instant tk, cette nouvelle mesure intermédiaire étant plus récente que la mesure intermédiaire reçue lors de la précédente exécution du premier algorithme, puis
    - l'estimation de la nouvelle valeur $P^i_k$ de la donnée à partir de la nouvelle mesure intermédiaire reçue,

- à un instant $t_1$, l'arrêt de la phase active et le passage dans une phase d'indisponibilité qui dure plusieurs instants $t_k$ et pendant laquelle l'exécution par le deuxième calculateur du premier algorithme est inhibée,
- pendant la phase d'indisponibilité, le premier calculateur :

  - continue d'acquérir, à chaque instant $t_a$, les mesures de la grandeur physique réalisées par le capteur électronique et à établir, à chaque instant $t_k$, une mesure intermédiaire à partir des mesures acquises aux instants $t_a$, et
  - enregistre les mesures intermédiaires établies dans une mémoire,

- à un instant $t_2$, l'arrêt de la phase d'indisponibilité et le retour à la phase active.

Le premier calculateur est souvent connu sous le terme anglais de « sensor processor » ou « sensor hub ». Un tel premier calculateur est généralement déjà présent dans tout appareil incorporant un capteur électronique. Il n'est donc pas nécessaire d'ajouter un nouveau calculateur, en plus de ceux déjà existants, dans l'appareil. Typiquement, ce premier calculateur est utilisé pour gérer le transfert des mesures entre le capteur électronique et le deuxième calculateur. Ce premier calculateur est aussi souvent utilisé pour mettre en forme les nouvelles mesures ou filtrer les nouvelles mesures avant de les transmettre au deuxième calculateur. Toutefois, la puissance de calcul de ce premier calculateur est souvent beaucoup moins importante que celle du deuxième calculateur. Ainsi, ce premier calculateur est souvent incapable d'exécuter assez rapidement le premier algorithme.

Typiquement, le deuxième calculateur est connu sous le terme anglais de « host processor » ou « application processor » ou « context hub ».

Le passage dans la phase d'indisponibilité peut correspondre à une mise en veille du deuxième calculateur ou à une mise en attente de l'exécution du premier algorithme car le deuxième calculateur doit exécuter d'autres tâches plus prioritaires.

Par « compression » on désigne dans ce texte l'opération qui consiste à diminuer la quantité de mémoire utilisée. Cette compression peut être avec perte ou sans perte. Lorsque la compression est avec perte, il n'est pas possible de retrouver, à partir des données enregistrées, la totalité des données originales.

A l'issue de la phase d'indisponibilité, le deuxième calculateur exécute d'abord le premier algorithme sur les mesures intermédiaires enregistrées avant de traiter les nouvelles mesures intermédiaires reçues depuis le retour à la phase active. Toutefois, la quantité de mesures intermédiaires enregistrées pendant la phase d'indisponibilité peut être importante. Dans ce cas, le traitement par le deuxième calculateur des mesures intermédiaires enregistrées peut retarder de façon significative le traitement des nouvelles mesures intermédiaires reçues après l'instant $t_2$. Ceci n'est pas souhaitable.

Pour limiter le nombre de mesures intermédiaires enregistrées dans la mémoire pendant la phase d'indisponibilité et pour éviter de dépasser la capacité de cette mémoire, la demande US2012/254878A1 propose de réveiller le deuxième calculateur soit périodiquement soit à chaque fois qu'un événement particulier se produit. Cela évite effectivement de dépasser la capacité de la mémoire mais au détriment d'une exécution plus fréquente de la phase active. L'exécution fréquente de la phase active a des conséquences techniques sur le fonctionnement de l'appareil comme une augmentation de sa consommation électrique ou un ralentissement des traitements réalisées pour d'autres applications exécutées par le même deuxième calculateur.

Dans ce contexte, l'invention vise à proposer un tel procédé de traitement des mesures d'un capteur électronique qui permet à la fois d'estimer la valeur $P^i_w$ de la donnée à au moins un instant $t_w$ compris dans l'intervalle $]t_1 ; t_2]$ tout en permettant de limiter encore plus la fréquence des retours dans la phase active.

Elle a donc pour objet un procédé de traitement des mesures d'au moins un capteur électronique conforme à la revendication 1.

Dans le procédé revendiqué, pendant la phase d'indisponibilité, le premier calculateur relève et enregistre des caractéristiques du signal mesuré qui sont moins nombreuses que les mesures intermédiaires établies par ce même premier calculateur pendant la phase active. Autrement dit, le taux de compression des mesures des capteurs pendant la phase d'indisponibilité est plus élevé que le taux de compression de ces mêmes mesures pendant la phase active. Ensuite, avant de retourner à la phase active, le deuxième calculateur exécute, lors d'une phase de réveil actif, un second algorithme qui permet d'estimer la valeur $P^i_w$ de la donnée à un instant $t_w$ compris dans l'intervalle $]t_1 ; t_2]$ à partir seulement des caractéristiques relevées par le premier calculateur pendant la phase d'indisponibilité. Etant donné que, sur une période de même durée, les caractéristiques relevées pendant la phase d'indisponibilité sont moins nombreuses que les mesures intermédiaires, il est possible de rester dans la phase d'indisponibilité plus longtemps tout en consommant la même quantité de mémoire. La fréquence des retours dans la phase active peut donc être diminuée. De plus, généralement, puisque le nombre de caractéristiques relevées pendant la phase d'indisponibilité est inférieur au nombre de mesures intermédiaires qui auraient été établies pendant la même période de temps, l'exécution du second algorithme est plus rapide que celle du premier algorithme ce qui accélère le retour vers la phase active. Le retard pour redémarrer la phase active est donc limité.

Les modes de réalisation de ce procédé peuvent comporter une ou plusieurs des caractéristiques des revendications dépendantes.

Ces modes de réalisation présentent en outre les avantages suivants :

- Le fait que le second algorithme estime la valeur $P^i_w$ à partir de caractéristiques relevées à la fois avant et après l'instant $t_w$ permet d'augmenter la précision de cette estimation. En effet, contrairement au premier algorithme, ce second algorithme prend en plus en compte les caractéristiques relevées après l'instant $t_w$.
- L'utilisation de la valeur $P^i_w$ fournie par l'exécution du second algorithme d'estimation pour initialiser la valeur $P^i_{k-1}$ du premier algorithme permet d'initialiser plus précisément cette valeur $P^i_{k-1}$ car il est alors tenu compte de ce qui s'est passé pendant la phase d'indisponibilité.
- Après l'instant $t_2$, initialiser la position $P^i_{k-1}$ à partir de la dernière position construite $P^i_{t1}$ avant le passage dans la phase d'indisponibilité et du trajet parcouru relevé pendant la phase d'indisponibilité, permet d'initialiser plus précisément cette position $P^i_{k-1}$.
- Générer plusieurs positions initiales possibles en sortie de la phase d'indisponibilité à partir de plusieurs positions respectives enregistrées au moment où le calculateur bascule dans la phase d'indisponibilité permet de reprendre, à l'issue de la phase d'indisponibilité, les mêmes hypothèses sur la position de l'appareil que celles formulées juste avant le passage dans la phase d'indisponibilité. On assure ainsi la continuité de ces hypothèses malgré l'existence d'une phase d'indisponibilité. Autrement dit, on limite la perte d'informations liée à la phase d'indisponibilité et donc on améliore la localisation de l'appareil au moment où l'on revient dans la phase active.
- Enregistrer seulement les M positions les plus probables juste avant le basculement dans la phase d'indisponibilité permet de diminuer la quantité d'informations stockées et le nombre d'hypothèses à traiter sans pour autant décroître la précision de la localisation de l'appareil au moment de la sortie de la phase d'indisponibilité.
- L'estimation de la position initiale à la sortie de la phase d'indisponibilité en utilisant un second algorithme qui corrige la position de chaque point du trajet en prenant en compte tous les autres points du trajet aussi bien situés en amont qu'en aval de ce point, permet d'obtenir un trajet corrigé plus précis.
- Corriger le trajet relevé pendant la phase d'indisponibilité à l'aide du facteur correctif d'un biais de mesure estimé juste avant le basculement dans la phase d'indisponibilité permet d'obtenir un trajet corrigé plus précis. On obtient alors une estimation plus précise de la position de l'appareil en sortie de la phase d'indisponibilité.
- L'enregistrement de points caractéristiques du trajet à la place de toutes les positions de l'appareil, permet de limiter la quantité d'information enregistrée pendant cette phase d'indisponibilité et donc d'économiser de l'espace mémoire. De plus, le fait de limiter la quantité d'informations enregistrée permet d'accélérer l'exécution du second algorithme qui estime la position actuelle de l'appareil à la sortie de la phase d'indisponibilité.
- Identifier des points caractéristiques supplémentaires en plus de ceux où un changement de direction important se produit, permet d'améliorer la précision du trajet relevé.

L'invention a également pour objet un support d'enregistrement d'informations comportant des instructions pour exécuter le procédé ci-dessus lorsque ces instructions sont exécutées par un calculateur électronique.

L'invention a également pour objet une unité électronique de traitement apte à mettre en œuvre le procédé revendiqué.

Enfin, l'invention a également pour objet un appareil directement transportable à la main par un être humain, cet appareil comportant au moins un capteur électronique apte à mesurer une grandeur physique, dans lequel l'appareil comporte aussi l'unité électronique revendiquée, cette unité électronique étant raccordée à ce capteur électronique.

L'invention sera mieux comprise à la lecture de la description qui va suivre, donnée uniquement à titre d'exemple non limitatif, et faite en se référant aux dessins sur lesquels :

- la figure 1 est une illustration schématique en coupe verticale d'un bâtiment à l'intérieur duquel est mis en œuvre un procédé de localisation d'un appareil ;
- la figure 2A est une illustration schématique d'un appareil de localisation ;
- la figure 2B est une illustration schématique d'un mode de réalisation d'une unité de calcul de l'appareil de la figure 2B ;
- la figure 3 est une illustration schématique d'un jeu de contraintes utilisé pour localiser l'appareil de la figure 2A dans le bâtiment de la figure 1 ;
- la figure 4 est un organigramme d'un procédé de localisation mis en œuvre par l'appareil de la figure 2A ;
- la figure 5 est une illustration schématique d'un exemple de graphe des trajets possibles utilisé par l'appareil de la figure 2A ;
- les figures 6 et 7 sont des exemples de trajets, respectivement, relevé et corrigé par l'appareil de la figure 2A ;
- la figure 8 est une illustration schématique d'une étape de correction d'un trajet relevé à l'aide du graphe de la figure 5,
- la figure 9 est un chronogramme de différentes phases de fonctionnement de différents calculateurs utilisés dans l'appareil de la figure 2A, et
- la figure 10 est un organigramme d'un procédé de traitement des mesures d'au moins un capteur logé dans un appareil tel que l'appareil de la figure 2A.

Dans ces figures, les mêmes références sont utilisées pour désigner les mêmes éléments. Dans la suite de cette description, les caractéristiques et fonctions bien connues de l'homme du métier ne sont pas décrites en détail.

L'exemple de mode de réalisation de l'invention est décrit pas suite dans le cas particulier d'un procédé de localisation d'un appareil à l'intérieur d'un bâtiment. Toutefois, la solution décrite dans ce cas particulier s'applique à tout contexte où le problème exposé dans l'introduction de cette demande de brevet se rencontre.

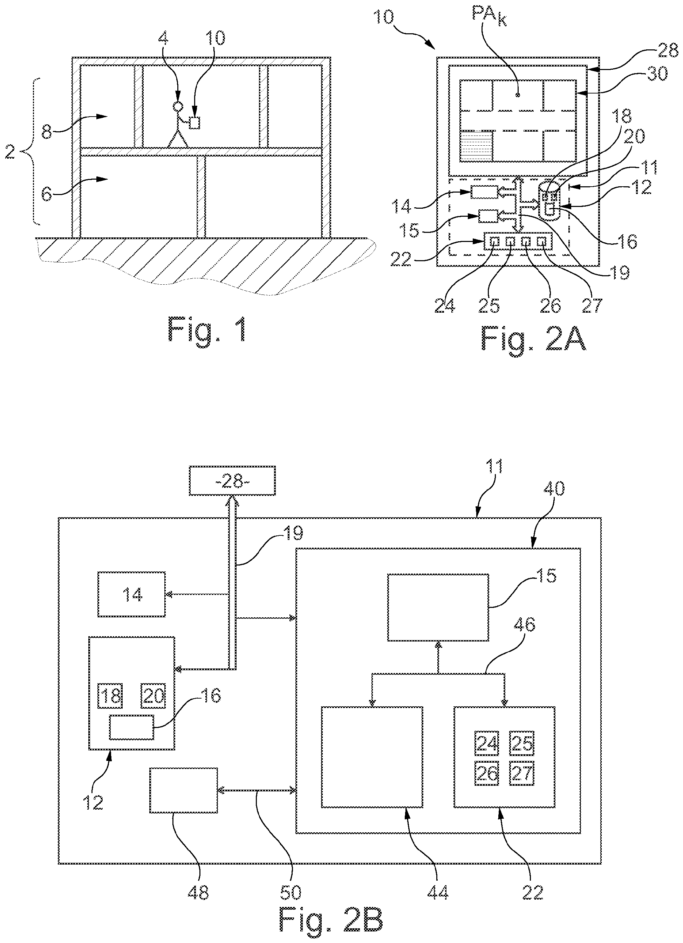

La figure 1 représente un ensemble comportant un bâtiment 2, à l'intérieur duquel un piéton 4 peut se déplacer librement en marchant. Le bâtiment 2 se divise en plusieurs étages. Ici, seul un rez-de-chaussée 6 et un premier étage 8 sont représentés. Les étages sont reliés entre-eux par des zones de changement d'étage telles qu'un escalier ou un ascenseur. Chaque étage comporte des pièces et des couloirs délimités par des murs infranchissables par le piéton 4. Le piéton 4 peut rentrer à l'intérieur d'une pièce uniquement en franchissant une porte. Ici, l'intérieur d'une pièce peut également comporter des obstacles infranchissables par le piéton 4 comme, par exemple, des piliers ou autres éléments de construction du bâtiment 2.

Pour aider le piéton 4 à se localiser à l'intérieur du bâtiment 2, celui-ci transporte, par exemple directement à la main, un appareil 10 de localisation. L'appareil 10 est capable de se localiser sur une carte du bâtiment 2 seulement à l'aide d'un capteur de position relative. En particulier, l'appareil 10 peut repérer sa position à l'intérieur du bâtiment 2 sans utiliser un système de navigation faisant appel à des balises externes de repérage, par exemple des balises implantées dans l'environnement du bâtiment 2. Ces balises externes peuvent être des satellites ou des émetteurs d'ondes radio fixés au bâtiment 2. Par conséquent, l'appareil 10 peut repérer sa position sans utiliser un système GPS (« Global Positionning System »).

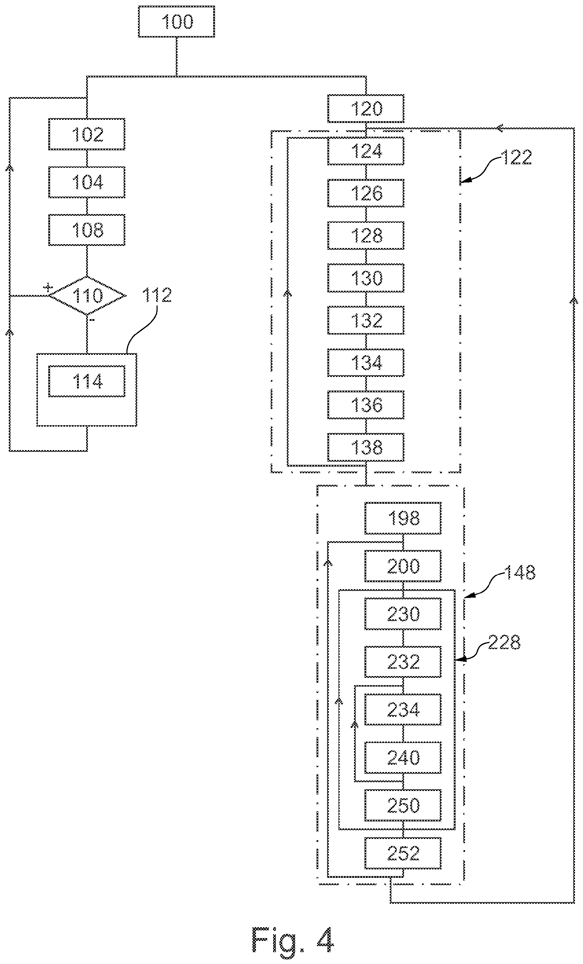

La figure 2A représente plus en détail l'appareil 10. L'appareil 10 comporte une unité électronique 11 de calcul qui capable, en outre, de localiser l'appareil 10. Cette unité 11 comporte une mémoire 12 ainsi qu'un calculateur électronique principal 14 et un calculateur électronique 15 dédié au traitement des mesures. Les calculateurs 14 et 15 sont des calculateurs programmables capables chacun d'exécuter des instructions enregistrées dans une mémoire. Typiquement, il s'agit de microprocesseurs. Le calculateur 14 est connu sous le terme anglais de « host processor » ou « application processor ». Il est configuré pour exécuter les différentes opérations nécessaires au fonctionnement général et normal de l'appareil 10. A cet effet, le calculateur 14 est raccordé à une mémoire 12. La mémoire 12 est connue sous le terme anglais de « host memory ». La mémoire 12 comporte les instructions nécessaires pour exécuter le procédé de la figure 4. De plus, la mémoire 12 comprend au moins :

- une carte 16 du bâtiment 2,
- des instructions pour exécuter un premier algorithme 18 d'estimation de la position de l'appareil 10 à l'intérieur du bâtiment 2, et

- des instructions pour exécuter un second algorithme 20 d'estimation de la position de l'appareil 10 à l'intérieur du bâtiment 2.

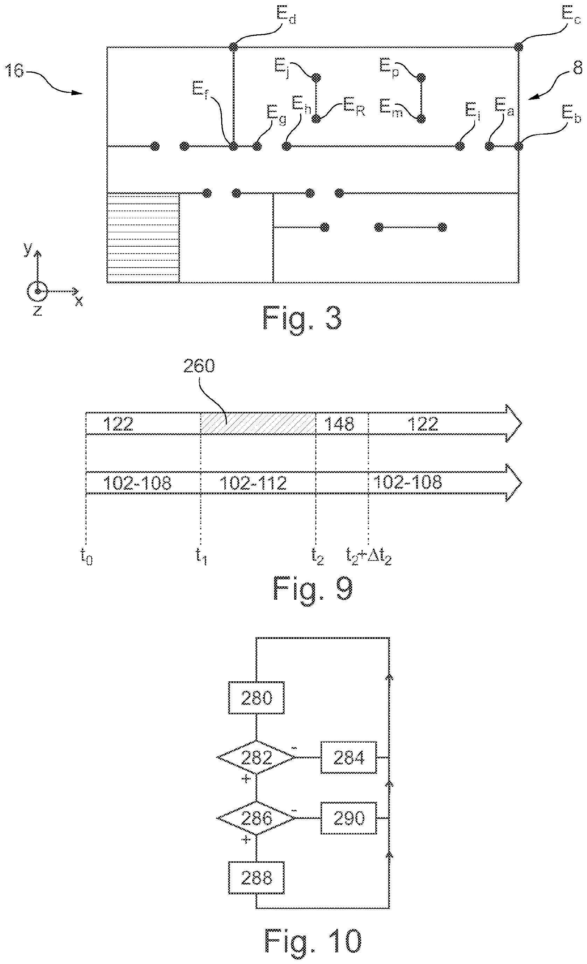

L'unité 11 et la carte 16 sont décrits plus en détail en référence, respectivement, aux figures 2B et 3.

L'algorithme 18 est un algorithme « en ligne » ou un « algorithme d'apprentissage incrémental » plus connu sous le terme anglais de « online algorithm ». L'algorithme 18 est également désigné sous le terme « d'algorithme d'estimation temps réel » ou de « real-time algorithm » en anglais. Il s'agit d'un algorithme capable d'estimer, à chaque instant $t_k$, la position actuelle $PA_k$ de l'appareil 10 à l'intérieur du bâtiment 2 en utilisant seulement les mesures acquises par une centrale inertielle 22. Les instants $t_k$ sont les instants auxquels l'algorithme 18 est exécuté pour estimer la position actuelle $PA_k$ de l'appareil 10. Typiquement, deux instants $t_{k-1}$ et $t_k$ immédiatement successifs sont séparés l'un de l'autre par une durée supérieure à 0,01s ou 0,1s. Ici, l'algorithme 18 est un filtre particulaire, plus connu sous le terme anglais de « Particle filter ». Les filtres particulaires sont bien connus. Par exemple, le lecteur peut se référer aux documents suivants :

- les demandes de brevet WO2012158441 et US8548738B1,
- l'article O. Woodman et Al, « Pedestrian localisation for indoor environments », ACM, 2008.
- la la thèse de J. Straub, « Pedestrian indoor localisation and tracking using a particule filter combined with a learning accessibility map », thèse, août 2010, Université technique de Munich. Cette thèse est téléchargeable à l'adresse suivante : http://people.csail.mit.edu/jstraub/download/Straub10PedestrianLocalization.pdf. Par la suite, cette thèse est référencée sous le terme « Straub2010 ».

Ainsi, le fonctionnement d'un filtre particulaire est considéré comme connu. Par exemple, dans ce mode de réalisation, l'algorithme 18 est celui décrit dans la demande française déposée sous le numéro FR1455575 le 18 juin 2014 par le Commissariat à l'énergie atomique et aux énergies alternatives.

On rappelle ici que dans cette demande FR1455575, les coordonnées de chaque particules $S^i$ sont mise à jour à l'aide d'une loi de déplacement. La loi de déplacement permet de calculer, à partir de la direction $\theta_k$ et l'amplitude $l_k$ du déplacement de l'appareil 10, acquis à l'instant $t_k$, le déplacement de la particule $S^i$ depuis sa position précédente $P^i_{k-1}$ jusqu'à sa nouvelle position $P^i_k$. Ce déplacement est directement corrélé à celui de l'appareil 10. Typiquement, ce déplacement entre les positions $P^i_{k-1}$ et $P^i_k$ est identique ou très proche de celui de l'appareil 10 entre les instants $t_{k-1}$ et $t_k$. Par la suite, l'exposant « i » est l'identifiant de la particule et l'indice « k » est le numéro d'ordre de l'instant $t_k$ où est exécuté l'algorithme 18.

Lorsque le piéton 4 se déplace en marchant sur le plancher de l'étage 8, une loi de déplacement est donnée par les relations suivantes :

$$x^i_k = x^i_{k-1} + v_k * \Delta t * \cos\theta_k \ ;$$

$$y^i_k = y^i_{k-1} + v_k * \Delta t * \sin\theta_k,$$

où :

- $(x^i_k, y^i_k)$ et $(x^i_{k-1}, y^i_{k-1})$ sont les coordonnées, dans le plan du plancher, des positions $P^i_k$ et $P^i_{k-1}$ de la particule $S^i$ ;
- $\Delta t$ est l'intervalle de temps $t_k$-$t_{k-1}$, et
- $v_k$ est la vitesse du déplacement entre les instants $t_k$ et $t_{k-1}$. Elle est donnée par la rapport $l_k/\Delta t$.

Dans le cas d'un procédé de localisation de l'appareil 10 mettant en œuvre un filtre particulaire, il est intéressant d'explorer le plus grand nombre possible de trajectoires avec les particules. Ainsi, classiquement, le déplacement de chaque particule est perturbé de façon aléatoire. Par exemple, pour cela, la loi de déplacement utilisable est la suivante :

$$x^i_k = x^i_{k-1} + v_k * \Delta t * \cos\theta_k + \mu^i_x \ ;$$

$$y^i_k = y^i_{k-1} + v_k * \Delta t * \sin\theta_k + \mu^i_y \ ;$$

où $\mu^i_x$ et $\mu^i_y$ sont des variables aléatoires.

A chaque instant $t_k$ et pour chaque particule $S^i$, les valeurs de ces variables $\mu^i_x$ et $\mu^i_y$ sont tirées au sort en fonction d'une loi prédéfinie de probabilité centrée, c'est-à-dire caractérisée par une espérance mathématique nulle. Ainsi, la moyenne des valeurs de chaque variable aléatoire $\mu^i_x$ et $\mu^i_y$ aux différents instants successifs $t_k$ tend vers zéro lorsque k augmente. Par exemple, cette loi prédéfinie de probabilité est la même pour les variables aléatoires $\mu^i_x$ et $\mu^i_y$ et pour toutes les particules $S^i$. Par la suite, elle est notée $Lp_{xy}$. Cette loi $Lp_{xy}$ est caractérisée par un écart type $\sigma_{xy}$ prédéterminé. Ici, l'écart type $\sigma_{xy}$ est constant et indépendant des mesures de la centrale inertielle 22 pour une mise à jour à chaque pas. Par exemple, l'écart type $\sigma_{xy}$ est supérieur à 5 cm ou 10 cm et, de préférence, inférieur à 35 cm. Par exemple, la loi $Lp_{xy}$ est une distribution uniforme ou une distribution gaussienne.

Dans la réalité, il peut aussi exister un biais de mesure, appelé biais de direction, sur la mesure de la direction $\theta_k$. Un tel biais de direction peut provenir d'un défaut sur les capteurs de la centrale inertielle 22. Ce biais de direction peut aussi être causé par le fait que le piéton 4 ne pointe pas l'appareil 10 dans sa direction de déplacement. De façon similaire, il peut aussi exister un biais de mesure, appelé ici biais de pas, sur la mesure de l'amplitude $l_k$ du déplacement de l'appareil 10. Ce biais de pas peut provenir d'un défaut des capteurs de la centrale inertielle 22 ou d'une erreur de modélisation. Typiquement, ces biais sont constants au moins pendant un intervalle de temps assez long pour pouvoir les estimer et les corriger comme décrit par la suite.

Ici, pour compenser et corriger ces biais de direction et de pas, la loi de déplacement utilisée intègre des facteurs correctifs, respectivement $\alpha^i$ et $\varepsilon^i$ associés à chaque particule $S^i$. Par exemple, la loi de déplacement est donnée par les relations suivantes :

$$x^i_k = x^i_{k-1} + v_k * \Delta t * (1+\varepsilon^i_k) * \cos(\theta_k + \alpha^i_k) + \mu^i_x ;$$

$$y^i_k = y^i_{k-1} + v_k * \Delta t * (1+\varepsilon^i_k) * \sin(\theta_k + \alpha^i_k) + \mu^i_y ;$$

$$\varepsilon^i_k = \varepsilon^i_{k-1} + \mu^i_\varepsilon ;$$

$$\alpha^i_k = \alpha^i_{k-1} + \mu^i_\alpha ;$$

où :

- $\varepsilon^i_k$ et $\varepsilon^i_{k-1}$ sont les valeurs, respectivement aux instants $t_k$ et $t_{k-1}$, du facteur correctif $\varepsilon^i$ utilisé pour corriger le biais de pas, et
- $\alpha^i_k$ et $\alpha^i_{k-1}$ sont les valeurs, respectivement aux instants $t_k$ et $t_{k-1}$, du facteur correctif $\alpha^i$ utilisé pour corriger le biais de direction,
- $\mu^i_\varepsilon$ et $\mu^i_\alpha$ sont des variables aléatoires.

Les variables aléatoires $\mu^i_\varepsilon$ et $\mu^i_\alpha$ sont utilisées pour les mêmes raisons et de la même manière que les variables $\mu^i_x$ et $\mu^i_y$ précédemment introduites. Ainsi, une nouvelle valeur des variables $\mu^i_\varepsilon$ et $\mu^i_\alpha$ est tirée au sort à chaque nouvel instant $t_k$ et pour chaque particule $S^i$ en fonction, respectivement, d'une loi prédéfinie de probabilité $Lp_\varepsilon$ et d'une loi prédéfinie de probabilité $Lp_\alpha$. Typiquement, ces lois $Lp_\varepsilon$ et $Lp_\alpha$ sont les mêmes pour toutes les particules $S^i$. Ici, les espérances mathématiques des lois $Lp_\varepsilon$ et $Lp_\alpha$ sont égales à zéro. Par conséquent, comme pour les variables aléatoires $\mu^i_x$ et $\mu^i_y$, la moyenne des valeurs de chaque variable aléatoire $\mu^i_\varepsilon$ et $\mu^i_\alpha$ aux différents instants successifs tk tend vers zéro lorsque k augmente.

De plus, la fonction des variables $\mu^i_\varepsilon$ et $\mu^i_\alpha$ est seulement de venir légèrement perturber les précédentes valeurs $\varepsilon^i_{k-1}$ et $\alpha^i_{k-1}$ des facteurs correctifs $\varepsilon^i$ et $\alpha^i$ pour que les valeurs des facteurs correctifs $\varepsilon^i$ et a' restent stables dans le temps. A cet effet, les écarts types $\sigma_\varepsilon$ et $\sigma_\alpha$, respectivement, des lois $Lp_\varepsilon$ et $Lp_\alpha$, ne permettent pas une variation rapide des valeurs des facteurs correctifs $\varepsilon^i$ et $\alpha^i$. Ici, a cet effet, l'écart type $\sigma_\varepsilon$ est choisi suffisamment petit pour que le ratio $\Sigma\sigma_{\varepsilon k}/T$ soit inférieur à 10 %/s et, de préférence, inférieur à 5 %/s ou 1%/s, où :

- $\sigma_{\varepsilon k}$ est l'écart type de la loi $Lp_\varepsilon$ lors de la k-ième itération de l'étape 126 (figure 4),
- $\Sigma\sigma_{\varepsilon k}$ est la somme des écarts types $\sigma_{\varepsilon k}$ entre la q-ième itération et la p-ième itération de l'étape 126, où q est un entier strictement inférieur à p,
- T est la durée en seconde de l'intervalle de temps qui s'est écoulé entre la q-ième et la p-ième itération de l'étape 126.

Ici, l'écart type $\sigma_\varepsilon$ est constant. Ainsi, le précédent ratio peut aussi s'écrire : $(p-q)\sigma_\varepsilon/T$. Dans ce cas, quels que soient p et q, le ratio est constant. La différence p-q est généralement assez grande pour couvrir une période de temps supérieure à 1s ou 4s et, généralement, inférieure à 10 min ou 5 min ou 1 min. Par exemple, cette différence entre p et q est constante quel que soit p.

De façon similaire, l'écart type $\sigma_\alpha$ est choisi suffisamment petit pour que le ratio $\Sigma\sigma_{\alpha k}/T$ soit inférieur à 10°/s et, de préférence, inférieur à 5°/s ou 1°/s, où :

- $\sigma_{\alpha k}$ est l'écart type de la loi $Lp_\alpha$ lors de la k-ième itération de l'étape 126,
- $\Sigma\sigma_{\alpha k}$ est la somme des écarts types $\sigma_{\alpha k}$ entre la q-ième itération et la p-ième itération de l'étape 126, où q est un entier strictement inférieur à p,
- T est la durée en seconde de l'intervalle de temps qui s'est écoulé entre la q-ième et la p-ième itération de l'étape 126.

Ici, l'écart type $\sigma_\alpha$ est aussi constant. Ainsi, le précédent ratio peut aussi s'écrire : $(p-q)\sigma_\alpha/T$.

Comme pour les variable $\mu^i_x$ et $\mu^i_y$, les variables $\mu^i_\varepsilon$ et $\mu^i_\alpha$ permettent d'explorer un grand nombre de valeurs possibles pour les facteurs correctifs $\varepsilon^i$ et $\alpha^i$.

Cette loi de déplacement fonctionne particulièrement bien dans les situations où le piéton 4 marche sur un sol horizontal. Par contre, la gestion des changements d'étages est réalisée, par exemple, comme décrit dans Straub2010.

L'algorithme 20 est un algorithme hors-ligne plus connu sous le terme anglais de « offline algorithm ». Contrairement à un algorithme temps réel, l'algorithme hors-ligne utilise toutes les mesures préalablement acquises entre deux instants $t_1$ et $t_2$ pour estimer la position PAk à plusieurs intants $t_w$ compris entre $t_1$ et $t_2$. Par exemple, l'algorithme 20 est un algorithme de « graph-matching » tel que celui décrit dans la thèse suivante : Ivan Spassov : « Algorithm for Map-Aided Autonomous Indoor Pedestrian Positionning and Navigation », THÈSE N° 3961 (2007), présentée le 23 novembre 2007 à la faculté de l'environnement naturel, architectural et construit, Laboratoire de topométrie, ÉCOLE POLYTECHNIQUE FÉDÉRALE DE LAUSANNE. Par la suite, cette thèse est référencée sous le terme « Spassov2007 ».

Le calculateur 14 est généralement un calculateur plus puissant que le calculateur 15, c'est-à-dire capable d'exécuter un plus grand nombre d'instructions par seconde. Ce calculateur 14 est également apte à basculer entre une phase active et une phase d'indisponibilité. Pendant la phase active, il a accès à un très grand nombre d'informations dont notamment la carte 16 et il exécute des applications de haut niveau tel que les algorithmes 18 et 20. Au contraire, dans la phase d'indisponibilité, le calculateur 14 est incapable d'exécuter les algorithmes 18 et 20. La suite de la description de ce mode de réalisation est faite dans le cas particulier où la phase d'indisponibilité correspond à une phase où le calculateur 14 est mis en veille pour économiser de l'énergie. Dans ce cas particulier, typiquement, le calculateur 14 bascule de la phase active vers la phase d'indisponibilité automatiquement en absence d'interaction avec le piéton 4 pendant un délai prédéterminé. Le piéton 4 interagit avec l'appareil 10 par l'intermédiaire d'une interface homme-machine. Le calculateur 14 peut aussi être mis en veille en réponse à une commande transmise par le piéton 4.

Le calculateur 15 est programmé pour gérer, en outre, le fonctionnement et l'acquisition des mesures de la centrale inertielle 22. Le calculateur 15 peut également effectuer des traitements limités sur les mesures acquises. Par contre, il est incapable d'exécuter les algorithmes 18 et 20 car ceux-ci nécessitent une puissance de calcul dont le calculateur 15 ne dispose pas. Par contre, le calculateur 15 transmet les mesures, éventuellement traitées localement, au calculateur 14 si celui-ci est dans sa phase active. A cause de sa puissance de calcul plus limitée, le calculateur 15 consomme beaucoup moins d'énergie que le calculateur 14 pour fonctionner. Ainsi, ici, le calculateur 15 est en permanence alimenté tant que l'appareil 10 est allumé. Par exemple, il fonctionne en permanence tant qu'il est nécessaire de localiser l'appareil 10 dans le bâtiment 2. Le calculateur 15 a aussi accès à moins d'informations que le calculateur 14. Par exemple, le calculateur 15 ne peut pas accéder à la carte 16 enregistrée dans la mémoire 12.

L'appareil 10 comporte la centrale inertielle 22. La centrale inertielle 22 logée à l'intérieur de l'appareil 10 mesure la direction de déplacement et l'amplitude du déplacement de cette appareil dans une direction depuis une position précédente de ce même appareil. Une centrale inertielle est un capteur de position relative car elle permet seulement d'estimer une nouvelle position de l'appareil par rapport à sa précédente position. Ainsi, pour estimer correctement la position de l'appareil à un instant tk, il faut absolument connaître la précédente position occupée à l'instant $t_{k-1}$. A l'inverse, un capteur de position, tel qu'un capteur GPS (Global Positionning System), est un capteur de position absolue car il est capable d'estimer la position de l'appareil sans avoir aucune connaissance sur la position précédente de ce même appareil. Ici, la centrale inertielle 22 comporte un accéléromètre 24, un gyromètre 25 et un magnétomètre 26. Les capteurs peuvent être des capteurs triaxes. De plus, dans ce mode de réalisation, la centrale inertielle 22 comporte aussi un baromètre 27 pour mesurer l'altitude de l'appareil 10.

La localisation de l'appareil 10 à partir des mesures de la centrale inertielle pose des problèmes particuliers qu'on ne rencontre pas avec l'utilisation de capteurs de position absolue. En particulier, il est généralement complexe d'utiliser directement et seulement les mesures d'un capteur de position relative pour localiser l'appareil car, dans ce cas, les erreurs sur la localisation de l'appareil s'accumulent au cours du temps. La localisation ainsi obtenue devient alors rapidement inexploitable. Il faut donc être capable de régulièrement corriger cette localisation sans pour autant avoir recours à un capteur de position absolue. Différentes solutions ont été proposées. Par exemple, pour corriger et améliorer l'estimation de la position de l'appareil, il est connu d'exploiter le fait qu'il existe des contraintes prédéfinies sur les déplacements de l'appareil à l'intérieur du bâtiment 2. Par exemple, une contrainte typique est qu'un déplacement ne peut pas traverser un mur. Ici, c'est la carte 16 qui contient ces contraintes prédéfinies sur les déplacements de l'appareil 10 à l'intérieur du bâtiment 2.

La centrale inertielle 22 transmet au calculateur 15, par l'intermédiaire d'un bus 19 de transmission d'informations, des mesures représentatives de la direction dans laquelle l'appareil 10 se déplace et de l'amplitude du déplacement dans cette direction depuis la dernière position relevée pour cet appareil 10.

L'appareil 10 est équipé d'une interface homme-machine comportant notamment un écran 28 permettant d'afficher une représentation graphique 30 de la carte 16 et, sur cette représentation graphique, un point $PA_k$ représentant la position actuelle de l'appareil 4 à l'intérieur du bâtiment 2. Ce point $PA_k$ est donc situé dans la représentation graphique 30 à l'emplacement de la carte 16 correspondant à la position actuelle de l'appareil 10 et donc du piéton 4.

Par exemple, dans ce mode de réalisation, l'appareil 10 est un téléphone ou une tablette électronique programmée pour exécuter le procédé de la figure 4.

La figure 2B représente plus en détail un mode de réalisation possible de l'unité 11 de calcul. L'unité 11 comprend une unité de traitement de déplacement désignée ici sous l'acronyme MPU (Motion Processing Unit) 40. Le MPU 40 comprend des capteurs internes. Ici, ces capteurs internes correspondent à ceux de la centrale inertielle 22. Un capteur interne est typiquement un MEMS (MicroElecroMechanical System) intégré sur la puce qui forme le MPU 40 ou intégré dans le même enrobage isolant que celui qui enrobe les autres éléments du MPU 40.

Le calculateur 14, la mémoire 12 et le MPU 40 sont raccordés les uns aux autres par le bus 19. Par exemple, le bus 19 est un bus PCIe (Peripherical Component Interconnect express), un bus USB (Univervsal Serial Bus), un bus série UART (Universal Asynchronous Receiver/Transmitter (UART), une interface AMBA (Advanced Microcontroller Bus Architecture), un bus I2C (Inter-Integrated Circuit), un bus SDIO (Serial Digital Input Output) ou autre bus similaire. De plus des signaux de signalisation additionnelle peuvent être utilisés en plus du bus 19 tel qu'une ligne d'interruption ou similaire. Des détails supplémentaires sur la réalisation du calculateur 14 et de la mémoire 12 peuvent être trouvés dans la demande déposée le 6 juin 2007 sous le numéro US11/774488, et dans la demande US12/106,921, déposée le 11 avril 2008. Des détails supplémentaires sur la réalisation de l'unité 40 sont disponibles auprès de la société InvenSense Inc en Californie.

Dans ce mode de réalisation, le MPU 40 comprend, en plus des capteurs 24 à 27, le calculateur 15 et une mémoire interne 44. La mémoire 44 stocke des instructions exécutables par le calculateur 15 pour la mise en œuvre du procédé de la figure 4. La mémoire 44 est aussi utilisable pour enregistrer les données mesurées par les capteurs 24 à 27. Par exemple, la mémoire 44 comporte une mémoire tampon FIFO (first in, first out) pour enregistrer un jeu des mesures réalisées par les capteurs 24 à 27. Le MPU 40 comprend aussi un bus 46 qui raccorde entre eux le calculateur 15, les capteurs 24 à 27 et la mémoire 44. Le bus 46 est par exemple similaire ou identique au bus 19. La mémoire 44 stocke, par exemple, un seul échantillon des mesures au même instant de mesure. Cette échantillon est ensuite récupérer par le calculateur 14 avant d'être remplacé par une nouvelle échantillon contenant des mesures plus récentes. Pour cela, par exemple, le MPU 40 signale au calculateur 14 qu'un nouvel échantillon de mesures est disponible en envoyant au calculateur 14 un signal d'interruption. Dans ce mode de réalisation, la fréquence à laquelle le signal d'interruption est transmis au calculateur 14 peut dépendre de la période d'échantillonnage des mesures. Ainsi, un signal d'interruption est transmis au calculateur 14 après l'enregistrement de chaque nouvel échantillon dans la mémoire 44 ou après l'enregistrement d'un nombre prédéterminé supérieur à deux de nouveaux échantillons dans la mémoire 44. Dans ce dernier cas, la mémoire 44 peut stocker simultanément plusieurs échantillons successifs de mesures. Le mode de fonctionnement qui vient d'être décrit dans le cas particulier des capteurs internes 24 à 27 peut aussi s'appliquer aux mesures de capteurs externes 48 raccordés par un bus 50 au MPU 40. Les capteurs externes 48 peuvent être situés et intégrés à l'intérieur de l'unité 11 ou situé sur un autre appareil distant. L'appareil distant peut être un bracelet, une montre ou un autre appareil distant portable par l'utilisateur. Cet appareil distant est raccordé à l'appareil 10 par une liaison filaire ou une liaison sans-fil. Le nombre de capteurs externes 48 peut être quelconque. Il peut s'agir d'un accéléromètre, d'un gyroscope, d'un magnétomètre, d'un baromètre, d'un hydromètre, d'un thermomètre, d'un microphone, d'un capteur de proximité ou d'un capteur d'intensité lumineuse ou autres.

La figure 3 représente graphiquement un exemple de contenu de la carte 16 pour l'étage 8 du bâtiment 2. Ce qui va maintenant être décrit pour l'étage 8 du bâtiment 2 s'applique à chaque étage de ce bâtiment et au rez-de-chaussée 6.

Le plan de l'étage 8 est typiquement horizontal. La carte 16 est similaire à celle décrite dans la demande française déposée sous le numéro FR1455575. Ainsi, seuls les détails nécessaires à la compréhension de l'invention sont donnés.

Le repère XYZ est un repère orthogonal dans lequel les directions X et Y sont horizontales et la direction Z est verticale.

Sur la figure 3, la périphérie de chaque pièce est délimitée par des murs représentés en traits fins. Ces murs sont des obstacles infranchissables par le piéton 4. De plus, chaque pièce comporte au moins une ouverture pour accéder à l'intérieur de cette pièce. Sur la figure 3, les ouvertures sont situées entre les extrémités des murs marquées par des points. Une ouverture est typiquement une porte. Une pièce peut aussi contenir d'autres obstacles infranchissables par le piéton 4. Par exemple, un obstacle infranchissable est une cloison intérieure ou un pilier ou tout autre élément du bâtiment 2 qui ne peut pas être traversé par le piéton 4. Chaque objet infranchissable constitue une contrainte sur le déplacement de l'appareil 10 à l'intérieur du bâtiment 2.

Dans cette carte 16, la position et les dimensions de chaque objet infranchissable sont codées par un segment horizontal contenu dans le plan du plancher. Ainsi, chaque identifiant d'obstacle est associé à une paire de points $E_{jd}$ et $E_{jf}$. Les points $E_{jd}$ et $E_{jf}$ marquent respectivement, le début et la fin du segment $[E_{jd} ; E_{jf}]$, où j est l'identifiant de l'obstacle infranchissable. Les coordonnées des points $E_{jd}$ et $E_{jf}$, dans le plan du plancher, sont connues et contenues dans la carte 16. Sur la figure 3, quelques points $E_a$ à ER sont représentés.

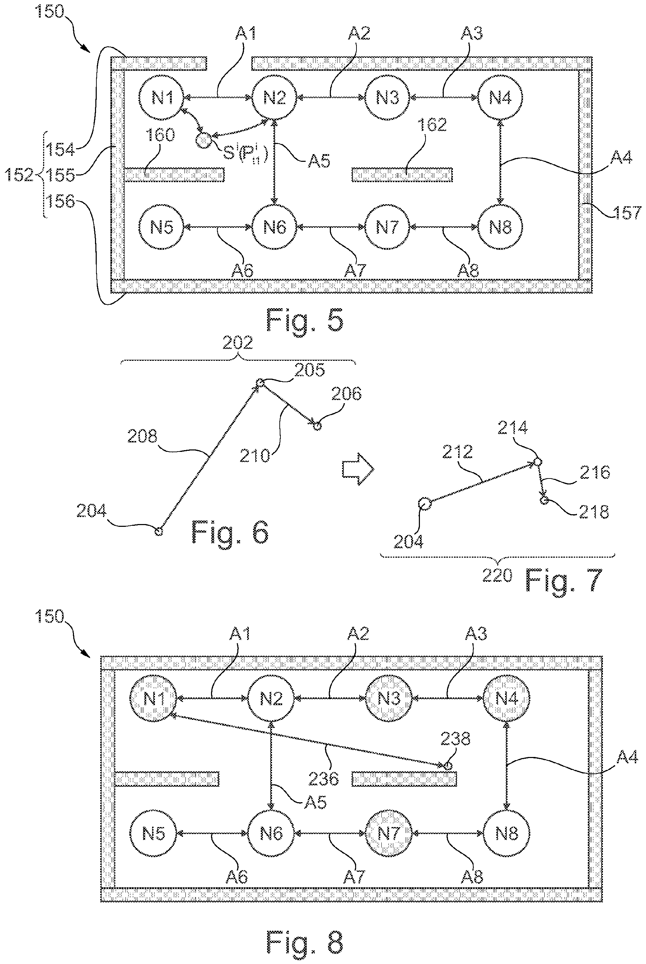

Le fonctionnement de l'appareil 10 va maintenant être décrit en référence au procédé de la figure 4 et à l'aide des figures 5 à 8.

A un instant $t_0$, lors d'une étape 100, le piéton 4 déclenche manuellement l'exécution par l'unité 11 du procédé de localisation de l'appareil 10 à l'intérieur du bâtiment 2. Le calculateur 14 est alors dans sa phase active ou bascule dans sa phase active.

Ensuite, lors d'une étape 102, la centrale inertielle 22 mesure, à chaque instant $t_a$, les grandeurs physiques telles que l'accélération, la direction du champ magnétique, la vitesse de rotation de l'appareil 10 et la pression atmosphérique. La fréquence des instants $t_a$ est plus élevée et, typiquement deux fois ou dix ou cent ou mille fois plus élevée, que celle des instants $t_k$,

Lors d'une étape 104, le calculateur 15 acquiert, à cette fréquence plus élevée que celle des instants $t_k$, les mesures de la centrale inertielle 22. Puis, dans ce mode de réalisation, il exécute un algorithme de détection d'un pas du piéton 4 à partir des mesures de l'accéléromètre. En effet, à chaque fois que le piéton 4 pose un pied par terre, cela correspond à une évolution temporelle caractéristique de l'accélération mesurée. Le calculateur 15 utilise cette évolution temporelle caractéristique pour détecter l'instant $t_p$ auquel le piéton 4 pose un pied par terre. Par exemple, le lecteur peut se référer à la demande de brevet déposée sous le numéro FR14050950, le 5 juillet 2014 par le déposant et intitulée « Procédé et dispositif de comptage de pas ».

Lors de l'étape 108, le calculateur 15 établit les mesures de la direction $\theta_k$ et de l'amplitude $I_k$ du déplacement de l'appareil 10 à l'instant $t_p$ puis les enregistre dans la mémoire 44. Ces mesures de la direction $\theta_k$ et de l'amplitude $I_k$ sont appelées « mesures intermédiaires ». Par la suite, on considère que la différence entre l'instant $t_p$ où les nouvelles mesures sont acquises et enregistrées dans la mémoire 44 et l'instant tk où l'algorithme 18 est exécuté par le calculateur 14 est négligeable. Dès lors, les instants $t_p$ et $t_k$ sont considérés comme étant égaux et seule la notation « $t_k$ » est aussi utilisée pour désigner l'instant où un pas est détecté.

Ainsi, le calculateur 15 réalise un traitement des mesures des grandeurs physiques fournies par la centrale inertielle 22 pour générer des mesures de la direction $\theta_k$ et de l'amplitude $I_k$ uniquement aux instants $t_k$. Seules ces mesures intermédiaires générées aux instants tk sont ensuite enregistrées de la mémoire 44. Ainsi, de manière avantageuse, sur une période de temps donnée, le nombre de mesures intermédiaires enregistrées dans la mémoire 44 par le calculateur 15, est inférieur, et de préférence deux ou dix ou cent ou mille fois inférieur, au nombre de mesures que le calculateur 15 reçoit de la centrale inertielle 22 sur la même période de temps. Le calculateur 15 réalise donc lors des étapes 104 et 108 une première compression des mesures de la centrale inertielle 22.

Lors de l'étape 108, le calculateur peut établir également d'autres grandeurs physiques supplémentaires qui sont ensuite exploitées par les algorithmes 18 et 20 pour accroître la précision de la localisation de l'appareil 10. Par exemple, le calculateur 15 établit la valeur d'un indicateur Manip($t_k$). L'indicateur Manip($t_k$) est égal à « 1 » si l'appareil 10 a été déplacé par rapport au corps du piéton 4 à l'instant $t_k$, et égal à « 0 » dans le cas contraire. Pour cela, le lecteur peut se référer à la demande de brevet déposée sous le numéro FR1363723 le 31 décembre 2013 par le déposant et intitulée « Procédé et dispositif de détection de manipulation d'un appareil portable ».

Toujours lors de l'étape 108, le calculateur 15 établit aussi une grandeur physique P($t_k$) dont la valeur est égale à la différence entre les pressions mesurées aux instants $t_{k-1}$ et $t_k$.

Ensuite, lors d'une étape 110, le calculateur 15 vérifie si le calculateur 14 est dans sa phase active. Dans l'affirmative, il rend disponible pour le calculateur 14 les mesures intermédiaires réalisées puis il retourne ensuite directement à l'étape 102 sans exécuter l'étape 112 suivante. Par exemple, les mesures intermédiaires préparées sont enregistrées dans la mémoire 44 et un signal d'interruption est transmis au calculateur 14 pour lui indiquer qu'il peut récupérer les nouvelles mesures intermédiaires enregistrées dans la mémoire 44. Ainsi, dans sa phase active, le nombre de mesures intermédiaires reçues et traitées par le calculateur 14 est égal au nombre d'instant $t_k$. Dans la négative, c'est-à-dire si le calculateur 14 est dans sa phase d'indisponibilité, alors, avant de retourner à l'étape 102, le calculateur 15 procède à l'étape 112.

Lors de l'étape 112, le calculateur 15 relève des caractéristiques du trajet parcouru par l'appareil 10 pendant que le calculateur 14 est dans sa phase d'indisponibilité. Par exemple, lors de cette étape 112, à chaque instant tk, le calculateur 15 construit la position PA$_k$ de l'appareil 10 uniquement à partir de la direction $\theta_k$ et amplitude $I_k$ établies et de la dernière position PA$_{k-1}$ construite. Dans ce mode de réalisation, c'est cette suite de positions qui constitue le trajet relevé par le calculateur 15 pendant la phase d'indisponibilité du calculateur 14. Le trajet relevé est enregistré dans la mémoire 44.

Lors de l'étape 112, le calculateur 15 cherche uniquement à relever le trajet parcouru par l'appareil 10 et non pas à le corriger. En effet, seul le calculateur 14 a accès à la carte 16 pour corriger la position relevée de l'appareil 10. Ainsi, lors de cette étape 112, le calculateur 15 ne corrige pas les positions construites pour éviter l'accumulation des erreurs de mesure de la centrale inertielle 22. En particulier, le calculateur 15 n'utilise pas la carte 16 ou tout autre source d'informations stockant des contraintes sur les déplacements du piéton 4 dans le bâtiment 2 pour éviter l'accumulation de telles erreurs. Le trajet relevé lorsque le calculateur 14 est dans sa phase d'indisponibilité peut donc comporter des erreurs importantes. En particulier, les biais de mesure des capteurs de la centrale inertielle 22 s'accumulent au fur et à mesure que le temps s'écoule.

Ici, lors de l'étape 112, le calculateur 15 procède à une opération 114 de relevé de points caractéristiques du trajet parcouru pendant la phase d'indisponibilité. Cette opération 114 vise à limiter le volume de données enregistrées dans la mémoire 44 pendant la phase d'indisponibilité. Cette opération 114 vise aussi à limiter le nombre d'informations à traiter par le calculateur 14, lors de son retour à la phase active, pour obtenir une estimation de la position de l'appareil 10 à partir des mesures réalisées pendant la phase d'indisponibilité. Pour cela, le calculateur 15 identifie des points caractéristiques dans le trajet parcouru par l'appareil 10 et enregistre ces points caractéristiques dans la mémoire 44. De plus, pour chaque paires de points caractéristiques successifs le long du trajet parcouru par l'appareil 10, le calculateur 15 détermine les coefficients d'un polynôme qui approxime le trajet de l'appareil 10 entre ces deux points caractéristiques. Par exemple, ici, ce polynôme est un polynôme de degré un. Ainsi, le trajet de l'appareil 10 entre deux points caractéristiques immédiatement successifs est approximé par un segment rectiligne qui relie directement ces deux points caractéristiques. Les positions intermédiaires de l'appareil 10 entre deux points caractéristiques relevées par le calculateur 15 sont, effacées de la mémoire 44. Pour obtenir moins de points caractéristiques qu'il y a de positions $PA_k$ construites, les points caractéristiques sont, par exemple, les points du trajet où l'amplitude du changement de la direction de déplacement de l'appareil 10 est supérieure à un seuil $S_\theta$ prédéterminé. Par exemple, un changement de direction est identifié quand $|\theta_k - Cap| > S_\theta$, où Cap est la direction de déplacement de l'appareil 10 obtenue à partir des précédentes mesures. Le seuil $S_\theta$ est par exemple supérieur à 50° ou 80°. Ici, le seuil $S_\theta$ est pris égal à 85°.

Un exemple de méthode possible pour déterminer ces points caractéristiques où la direction de déplacement change beaucoup, est décrit en détail dans la thèse Spassov2007 au chapitre 3.2.1. La description de cette méthode n'est donc pas reprise ici.

De plus, dans ce mode de réalisation, à ces points caractéristiques correspondant à des changements importants dans la direction de déplacement, le calculateur 15 ajoute d'autres points caractéristiques supplémentaires. Ces points caractéristiques supplémentaires ne correspondent pas nécessairement à un changement de direction important, mais à un changement important dans une autre grandeur physique mesurée par la centrale inertielle 22. Par exemple, le calculateur 15 ajoute un point caractéristique supplémentaire à chaque fois qu'au moins l'une des conditions suivantes est satisfaite :

1) La distance $\Delta D$ parcourue depuis le dernier point caractéristique identifié est supérieure à un seuil $S_D$ prédéterminé,
2) La différence de pression $P(t_k)$ est supérieure à un seuil prédéterminé $S_P$,
3) L'indicateur $Manip(t_k)$ vient de changer de valeur, et
4) Si la différence entre $t_k - T$ est supérieure à un seuil prédéterminé $S_T$, où T est l'instant où le dernier point caractéristique a été identifié.

Par exemple, le seuil $S_D$ est supérieur ou égal à 50m ou 100m, et inférieur ou égal à 500m ou 250m. Ce seuil $S_D$ peut être ajusté en fonction des caractéristiques du bâtiment 2. Par exemple, si le bâtiment 2 comporte de larges espaces ouverts, le seuil $S_D$ sera plus grand que si le bâtiment 2 comporte seulement des petites pièces. Ici, le seuil $S_D$ est pris égal à 100m. Le seuil $S_P$ est supérieur à 0,05 hPa et, généralement, supérieur à 0,1 hPa. Ici, le seuil $S_P$ est pris égal à 0,1 hPa. Le seuil $S_T$ est supérieur à 5s ou 10s. Ici, le seuil ST est égal à 100s.

La position de chaque point caractéristique et de chaque point caractéristique supplémentaire est enregistrée, par le calculateur 15, dans la mémoire 44.

Le cumul du nombre de points caractéristiques et du nombre de points caractéristiques supplémentaires enregistrés dans la mémoire 44 pendant la phase d'indisponibilité est strictement inférieur au nombre de mesures intermédiaires que le calculateur 15 aurait enregistré dans cette même mémoire 44 pendant la même durée lors de la phase active. Ainsi, lorsque l'opération 114 est exécutée, en plus de réaliser une première compression des mesures de la centrale inertielle 22, le calculateur 15 réalise une deuxième compression qui réduit encore plus le nombre d'informations enregistrées dans la mémoire 44. A cause de cette deuxième compression, lors de la phase d'indisponibilité, le nombre de points caractéristiques enregistrés dans la mémoire 44 est strictement inférieur au nombre d'instants tk qui se produisent pendant cette phase.

En parallèle, immédiatement après l'instant $t_0$, le calculateur 14 s'apprête à exécuter pour la première fois l'algorithme 18. Il n'existe donc aucune position précédemment estimée pour l'appareil 10 à l'aide de cet algorithme 18. Ainsi, le calculateur 14 commence par exécuter une étape 120 d'initialisation de l'algorithme 18. Pour cela, le calculateur 14 génère alors un jeu initial de $N_0$ particules $S^i$. Le nombre $N_0$ de particules S' dépend notamment des connaissances initiales que l'on a sur la position de l'appareil 10 dans le bâtiment 2 et de la surface de ce bâtiment. Typiquement, $N_0$ est supérieur à 10 ou 100. $N_0$ est également généralement inférieur à 5000 ou 1000. Chaque particule $S^i$ est associée initialement :

- à une position initiale $P^i_0$ à l'intérieur du bâtiment 2, cette position $P^i_0$ comportant les coordonnées $x^i_0$, $y^i_0$ et $z^i_0$ de la particule $S^i$ dans le repère XYZ,
- à une valeur initiale $w^i_0$ du poids $w^i$ représentant la probabilité que l'appareil 10 se trouve à l'emplacement de cette particule $S^i$ à l'instant $t_0$,
- à une valeur initiale $\alpha^i_0$ pour le facteur correctif $\alpha^i$, et
- à une valeur initiale $\varepsilon^i_0$ pour le facteur correctif $\varepsilon^i$.

Lors de l'étape 120, la position initiale $P^i_0$ et les valeurs initiales $w^i_0$, $\alpha^i_0$ et $\varepsilon^i_0$ sont initialisées. De nombreuses méthodes pour initialiser les positions $P^i_0$ et les valeurs $w^i_0$ de chaque particule sont connues. Par exemple, si la position initiale de l'appareil 10 est connue à plus ou moins 1 m près, les valeurs $P^i_0$ de toutes les particules $S^i$ sont tirées au hasard à l'intérieur d'un cercle centré sur la position connue et de rayon égale à 1 m. Si la position initiale de l'appareil 10 est totalement inconnue, alors les positions $P^i_0$ sont, par exemple, uniformément réparties dans l'ensemble du bâtiment 2. A titre d'illustration, chaque valeur $w^i_0$ est prise égale à $1/N_0$, où $N_0$ est le nombre initial de particules générées.

Chaque valeur $\alpha^i_0$ est tirée au hasard de manière à ce que la distribution des valeurs initiales $\alpha^i_0$ suive une loi $Lp_{\alpha 0}$ de probabilité prédéterminée telle qu'une distribution uniforme ou gaussienne ou autre. La loi $Lp_{\alpha 0}$ n'est généralement pas la même que la loi $Lp_\alpha$ utilisée pour obtenir les valeurs de la variable aléatoire $\mu^i_\alpha$. C'est la connaissance a priori que l'on a sur la distribution du biais de direction qui permet de choisir la loi de probabilité des valeurs initiales $\alpha^i_0$ qui ressemble le plus à celle observée dans la réalité. Par exemple, c'est aussi cette connaissance à priori sur la répartition des biais de direction qui permet de fixer la valeur de l'écart type $\sigma_{\alpha 0}$ de la loi $Lp_{\alpha 0}$. Par exemple, l'écart type $\sigma_{\alpha 0}$ est choisi égale à 360° si l'on a aucune information sur le biais de direction. Dans un autre exemple, l'écart type $\sigma_{\alpha 0}$ est choisi inférieur à 45° si l'on a quelques informations sur le biais de direction. Contrairement au cas des variables aléatoires précédentes, cette loi de probabilité $Lp_{\alpha 0}$ n'a pas nécessairement une moyenne nulle.

Chaque valeur initiale $\varepsilon^i_0$ est choisie comme décrit précédemment pour les valeurs initiales $\alpha^i_0$ sauf que l'on utilise une loi prédéfinie $Lp_{\varepsilon 0}$ de probabilité pour le biais de pas à la place de la loi $Lp_{\alpha 0}$. De plus, la loi de probabilité $Lp_{\varepsilon 0}$ n'est pas nécessairement identique à la loi $Lp_{\alpha 0}$. En effet, généralement, les biais de direction et de pas ne sont pas corrélés. Typiquement, l'écart type $\sigma_{\varepsilon 0}$ de la loi $Lp_{\varepsilon 0}$ est égale 30 % à plus ou moins 5 % près si l'on a aucune information sur le biais de pas. Dans un autre exemple, l'écart type $\sigma_{\varepsilon 0}$ est choisi inférieur à 20 % si l'on a quelques informations sur le biais de pas.

Ensuite, le calculateur 14 exécute une phase 122 de localisation de l'appareil 10 en exécutant l'algorithme 18.

Plus précisément, lors d'une étape 124, le calculateur 14 reçoit la direction $\theta_k$ et l'amplitude $l_k$ précédemment établies par le calculateur 15 pour l'instant $t_k$. A partir de ces mesures, le calculateur 14 calcule la vitesse $v_k$ du déplacement actuel de l'appareil 10 depuis sa dernière position. Ensuite, le calculateur 14 estime les nouvelles positions $P^i_k$ en exécutant les étapes suivantes.

Lors d'une étape 126, chaque particule est déplacée de manière corrélée avec le déplacement mesuré de l'appareil 10 depuis sa précédente position $P^i_{k-1}$ jusqu'à une nouvelle position $P^i_k$. Pour cela, les coordonnées de chaque particule $S^i$ sont mises à jour en fonction :

- de la direction $\theta_k$ et l'amplitude $l_k$ reçues,
- des coordonnées de la précédente position $P^i_{k-1}$ de cette particule, et
- de la loi de déplacement utilisée.

A chaque nouvelle exécution de l'étape 126, les nouvelles valeurs pour les variables $\mu^i_x$, $\mu^i_y$, $\mu^i_\alpha$ et $\mu^i_\varepsilon$ sont tirées au sort à l'aide des lois, respectivement, $Lp_{xy}$, $Lp_\alpha$ et $Lp_\varepsilon$.

Lors d'une étape 128, le calculateur 14 met à jour les poids $w^i$ de chaque particule $S^i$. Plus précisément, le calculateur 14 diminue le poids $w^i$ de la particule $S^i$ si son dernier déplacement de la position $P^i_{k-1}$ à la position P'k a enfreint des contraintes prédéfinies associées à la carte 16.

Typiquement, dans cet exemple de mode de réalisation, pour chaque particule $S^i$, le calculateur 14 vérifie la contrainte suivante :

- contrainte 1) : le segment $[P^i_{k-1}; P^i_k]$ ne doit pas traverser un obstacle infranchissable de la carte 16

De façon générale, ici on définit une contrainte sur le déplacement de la particule $S^i$ comme étant une condition qui, si elle est vérifiée par la particule $S^i$, est utilisée pour augmenter le poids $w^i$ de cette particule S' par rapport au poids des particules qui ne vérifient pas cette condition. A l'inverse si cette condition n'est pas vérifiée par la particule $S^i$, alors elle est utilisée pour diminuer le poids $w^i$ de cette particule $S^i$ par rapport aux poids des particules qui vérifient cette condition.

Pour évaluer la contrainte 1), pour chaque particule $S^i$, le calculateur 14 recherche s'il existe une intersection entre le segment $[P^i_{k-1}; P^i_k]$ et chaque obstacle infranchissable de la carte 16. Ici, puisque chaque obstacle est codé par un segment, cette recherche d'intersection revient à rechercher une intersection entre deux segments.

S'il existe une intersection, alors, une valeur très faible ou nulle est affectée au poids $w^i$. Une valeur très faible est une valeur inférieure à 0,2 ou 0,1 par exemple. Dans le cas contraire, la valeur du poids $w^i$ reste inchangée.

Lors d'une étape 130, le calculateur 14 procède à la normalisation des poids $w^i$ de toutes les particules $S^i$ pour que la somme de tous ces poids soit égale à un. Par exemple, le calculateur 14 calcule la somme W de tous les poids $w^i$ puis divise chaque poids $w^i$ par la somme W.

Lors d'une étape 132, le calculateur 14 ré-échantillonne les particules $S^i$. Cette étape de ré-échantillonnage consiste à supprimer les particules dont les poids $w^i$ sont devenus trop faibles pour les remplacer par des particules associées à des paramètres dont les poids sont plus forts.

De nombreuses techniques de ré-échantillonnage sont connues. Par exemple, ici, on applique la méthode SIR (Sequential Importance Resampling) décrite dans le livre suivant : B. Ristic, S. Arulampalam, N. Gordon, "Beyond the Kalman Filter, particle filter for tracking applications", Artech House, 2004.

En résumé, cette méthode de ré-échantillonnage consiste d'abord à classer les particules en deux groupes : les particules à régénérer, c'est-à-dire toutes les particules dont le poids est inférieur à un seuil prédéterminé et les particules survivantes, c'est-à-dire les autres particules.

Ensuite, pour chaque particule à régénérer, le calculateur 14 supprime l'ancienne particule puis génère une nouvelle particule pour la remplacer. Pour générer une nouvelle particule, le calculateur 14 tire aléatoirement une particule dans le groupe des particules survivantes. Ce tirage au sort est réalisé de préférence de telle sorte que la probabilité d'être tiré soit proportionnelle au poids de la particule survivante.

Ensuite, la position $P^i_k$ et les valeurs $\alpha^i_k$ et $\varepsilon^i_k$ de la particule survivante tirée sont affectées à la nouvelle particule générée. Lors de cette étape, de préférence, le calculateur ajoute une perturbation aléatoire sur la position et sur les valeurs des facteurs correctifs en utilisant, par exemple, les variables aléatoires $\mu_x$, $\mu_y$, $\mu_\alpha$ et $\mu_\varepsilon$. Toutefois, ces perturbations sont calibrées de manière à ce que les valeurs $\alpha^i_k$ et $\varepsilon^i_k$ affectées à la particule générée restent très proches des valeurs actuelles des facteurs correctifs associés à la particule survivante tirée. Typiquement, la moyenne des valeurs $\alpha^i_k$ affectées aux particules générées est plus proche de la moyenne des valeurs $\alpha^i_k$ des particules survivantes que de la moyenne des valeurs $\alpha^i_k$ des particules supprimées. Il en est de même pour les valeurs $\varepsilon^i_k$ affectées aux particules générées.

Un nouveau poids est également affecté à chaque particule générée et, éventuellement, à la particule survivante dont elle est issue.

Après le ré-échantillonnage, lors d'une étape 134, pour chaque particule $S^i$ survivante, le calculateur 14 enregistre dans la mémoire 12 la position $P^i_k$, les valeurs $\alpha^i_k$ et $\varepsilon^i_k$ et son poids w'.

Ensuite, lors d'une étape 136, le calculateur 14 estime la position PAk de l'appareil 10 à partir des positions $P^i_k$ et des poids $w^i$ de toutes les particules $S^i$. De nombreuses méthodes sont possibles pour faire cela. Par exemple, la position $PA_k$ est prise égale à celle de la particule $S^i$ ayant le poids w' le plus fort. Dans un autre mode de réalisation, la position $PA_k$ est prise égale à la moyenne des positions $P^i_k$ des particules $S^i$ en pondérant chaque position $P^i_k$ par le poids $w^i$. Une autre méthode est également décrite dans la demande WO2012158441.

Enfin, lors d'une étape 138, un point est affiché à la position $PA_k$ sur la représentation graphique 30 de la carte 16 pour indiquer au piéton 4 sa position sur cette carte et donc sa position à l'intérieur du bâtiment 2.

Les étapes 124 à 138 sont réitérées en boucle tant que le calculateur 14 reste dans sa phase active. Au fur et à mesure de ces itérations, la détérioration de la précision de l'estimation de la position de l'appareil 10 est limitée au maximum car seules les positions $P^i_k$ les plus probables sont conservées lors de l'étape 132 de ré-échantillonnage.

De plus, puisque les valeurs des facteurs correctifs $\alpha^i$ et $\varepsilon^i$ convergent vers les véritables valeurs des biais de direction et de pas au fur et à mesure des itérations des étapes 124 à 138, les facteurs correctifs corrigent de plus en plus précisément ces biais de direction et de pas. Dès lors, la présence de ces facteurs correctifs dans la loi de déplacement permet d'augmenter sensiblement la précision de l'estimation de la position $PA_k$ même en présence de tels biais de direction et de pas.

A un instant $t_1$, le calculateur 14 bascule, par exemple automatiquement, vers sa phase d'indisponibilité. Par exemple, ce basculement vers la phase d'indisponibilité est provoqué par l'absence d'interaction entre le piéton 4 et l'appareil 10 pendant une durée supérieure à un seuil prédéterminé. L'exécution de l'algorithme 18 est donc interrompue. Lorsque le calculateur 14 bascule vers sa phase d'indisponibilité, par exemple, il en informe le calculateur 15. Ici, ce basculement du calculateur 14 vers sa phase d'indisponibilité permet d'économiser de l'énergie et donc de limiter la décharge de la batterie de l'appareil 10. Par la suite, les dernières positions $P^i_k$, les derniers valeurs $w^i_k$ des poids $w^i$ et les dernières valeurs $\alpha^i_k$ et $\varepsilon^i_k$ enregistrées pour chaque particule $S^i$ juste avant l'instant $t_1$, sont notées, respectivement, $P^i_{t1}$, $w^i_{t1}$ et $\alpha^i_{t1}$ et $\varepsilon^i_{t1}$.

Pendant la phase d'indisponibilité, le calculateur 15 continue d'exécuter les étapes 102 à 108 et exécute en plus l'étape 112. Typiquement, la phase d'indisponibilité dure plusieurs intervalles $\Delta t$. Par exemple, elle dure au moins une 1 s et souvent plus de 1 min ou 5 min.

A un instant $t_2$, le calculateur 14 redevient disponible pour exécuter l'un quelconque des algorithmes 18 et 20. La phase d'indisponibilité s'interrompt donc à cet instant. Par exemple, l'arrêt de la phase d'indisponibilité est provoqué par une interaction du piéton 4 avec l'interface homme-machine de l'appareil 10. A cet instant, l'algorithme 18 doit de nouveau être initialisé, puisque entre les instants $t_1$ et $t_2$, l'appareil 10 a pu être déplacé à l'intérieur du bâtiment 2. Pour cela, le calculateur 14 exécute d'abord une phase 148 de réveil actif. Dans le cas particulier décrit ici, cette phase 148 vise à initialiser pour chaque particule $S^i$ sa position $P^i_{t2}$, son poids $w^i_{t2}$ et les valeurs initiales $\alpha^i_{t2}$ et $\varepsilon^i_{t2}$ des facteurs correctifs $\alpha^i$ et $\varepsilon^i$ en utilisant les données enregistrées par le calculateur 15 pendant la phase d'indisponibilité. Par la suite, pour simplifier la description, on suppose ici que les paramètres $w^i_{t2}$, $\alpha^i_{t2}$ et $\varepsilon^i_{t2}$ sont pris égaux, respectivement, aux paramètres $w^i_{t1}$, $\alpha^i_{t1}$ et $\varepsilon^i_{t1}$.

Pour déterminer la valeur de la position $P^i_{t2}$ à l'instant $t_2$, le calculateur 14 exécute, entre les instants $t_2$ et $t_2 + \Delta t_2$, l'algorithme 20.

Dans ce mode de réalisation, pour corriger le trajet relevé entre les instants $t_1$ et $t_2$, l'algorithme 20 utilise un graphe 150 (Figure 5) préenregistré dans la mémoire 12. Le graphe 150 code tous les trajets possibles à l'intérieur du bâtiment 2. Pour simplifier la figure 5, seule une partie du graphe 150 codant les trajets possibles à l'intérieur d'une seule pièce 152 a été représentée. Cette pièce 152 est délimitée par des murs 154 à 157 et comporte également, à l'intérieur, deux obstacles infranchissables 160 et 162.

Dans le graphe 150, chaque trajet possible comporte une succession de nœuds successifs $N_m$ reliés les uns aux autres par des segments rectilignes $A_J$. Par la suite, le premier nœud et le dernier nœud d'un trajet possible sont appelés, respectivement « nœud de départ » et « nœud d'arrivée » du trajet. De façon similaire, pour chaque segment $A_J$, qui s'étend entre deux nœuds, le nœud le plus proche du nœud de départ le long du trajet est appelé « nœud amont ». Tandis que le nœud le plus éloigné de ce nœud de départ est appelé « nœud aval ». Chaque nœud est situé à une position $P_{Nm}$ qui peut être occupée par l'appareil 10. La position $P_{Nm}$ de chaque nœud $N_m$ est exprimée dans le repère XYZ. Chaque position $P_{Nm}$ est connue. Par exemple, ici, ces positions $P_{Nm}$ sont choisies pour que la distance entre deux nœuds immédiatement consécutifs dans un trajet possible soit toujours égale à une constante D. Ici, cette constante D est égale à 1m. Les segments $A_J$ ne traversent jamais un obstacle infranchissable. Ainsi, l'existence d'un segment entre deux nœuds indique que l'appareil 10 peut passer librement d'un de ces nœuds à l'autre. Chaque segment $A_J$ est associé à un poids $w_{Aj}$. Par exemple, le poids $w_{Aj}$ indique la longueur du segment $A_J$. Dans cet exemple, les poids $w_{Aj}$ sont tous égaux.

Sur la figure 5, seuls huit nœuds N1 à N8 ont été représentés, reliés les uns aux autres par huit segments A1 à A8.

L'algorithme 20 comporte les étapes suivantes pour d'obtenir une position initiale $P^i_{t2}$ associée au poids $w^i_{t2}$ et aux valeurs $\alpha^i_{t2}$ et $\varepsilon^i_{t2}$.

Éventuellement, lors d'une étape 198, le calculateur 14 sélectionne un nombre M limité de particules parmi les particules $S^i$ et applique les étapes suivantes uniquement aux particules $S^i$ sélectionnées. Par exemple, le calculateur 14 sélectionne uniquement les particules $S^i$ dont le poids $w^i_{t1}$ est supérieur à un seuil prédéterminé $S_w$.

Ensuite, lors d'une étape 200, le calculateur 14 corrige le trajet, relevé pendant la phase d'indisponibilité puis extrait de la mémoire 44, à l'aide des facteurs correctifs $\alpha^i$ et $\varepsilon^i$ associés à la particule $S^i$. Cette étape est maintenant décrite dans le cas particulier du trajet représenté sur la figure 6. La figure 6 représente un exemple simplifié d'un trajet relevé 202 comportant seulement trois points caractéristiques 204 à 206. Les points 204 et 206 sont, respectivement, les points de départ et d'arrivée du trajet 202. Les points 204 et 205 sont connectés l'un à l'autre par un segment 208, et les points 205 et 206 sont connectés par un segment 210. La direction de parcours du trajet 202 est représentée par des flèches dans la figure 6.

Pour commencer, le calculateur 14 corrige la longueur du segment 208 en le multipliant par $(1 + \varepsilon^i_{t1})$. On tient compte ainsi du biais de pas estimé pour cette particule S' lors de la phase 122. Ensuite, le calculateur 14 fait tourner d'un angle $\alpha^i_{t1}$ le segment 208 autour d'un axe vertical passant par le point 204. Ainsi, le calculateur 14 corrige le biais de direction estimé pour cette même particule $S^i$ lors de la phase 122.

Le segment corrigé ainsi obtenu porte la référence 212 sur la figure 7. Le segment corrigé 212 pointe, depuis le point 204 vers un nouveau point caractéristique 214. Le point 214 est identique au point 205, sauf que sa position a été corrigée à l'aide des facteurs correctifs $\varepsilon^i_{t1}$ et $\alpha^i_{t1}$.

Le même traitement est ensuite appliqué au segment suivant 210. On obtient ainsi le segment corrigé 216 de la figure 7. Ce segment 216 pointe depuis le point caractéristique corrigé 214 vers un nouveau point caractéristique 218. Le point 218 est identique au point 206, sauf que sa position a été corrigée à l'aide des valeurs $\alpha^i_{t1}$ et $\varepsilon^i_{t1}$. Les points 206, 214 et 218 et les segments 212 et 216 forment un trajet 220 corrigé. Lors de l'étape suivante, c'est ce trajet 220 qui est utilisé et non pas le trajet non corrigé 202.

On notera que selon la particule $S^i$ traitée, le trajet corrigé obtenu n'est pas nécessairement le même, puisque les valeurs $\alpha^i_{t1}$ et $\varepsilon^i_{t1}$ peuvent être différentes d'une particule à l'autre.

Ensuite, lors d'une étape 228, le calculateur 14 corrige une nouvelle fois le trajet relevé mais cette fois à partir des obstacles infranchissables associés à la carte 16. Pour cela, il procède aux opérations suivantes.

La position $P^i_{t1}$ ne coïncide généralement pas exactement avec la position $P_{Nm}$ d'un nœud du graphe 150. Ainsi, lors d'une opération 230, le calculateur 14 associe la particule $S^i$ à un ou plusieurs nœuds du graphe 150 les plus proches. Cette étape est illustrée à l'aide de la figure 5. Sur la figure 5, en plus du graphe 150, on a représenté la position $P^i_{t1}$ de la particule $S^i$. La position $P^i_{t1}$ ne coïncide avec aucune des positions $P_{Nm}$ des nœuds du graphe 150. Le calculateur 14 associe alors la particule $S^i$ aux seuls nœuds les plus proches de la position $P^i_{t1}$. Ici, si plusieurs nœuds se trouvent à moins de X mètres de la position $P^i_{t1}$, chacun de ces nœuds est associé à la particule $S^i$. Par exemple, la distance X est constante et inférieure à 2m ou à 1m. Ici, la distance X est prise égale à 1m. Dans le cas où aucun nœud ne se trouve à moins de X mètres de la position $P^i_{t1}$, la particule $S^i$ est associée au nœud le plus proche. Dans l'exemple représenté sur la figure 5, la particule $S^i$ est associée aux nœuds N1 et N2 car elle est à moins d'un mètre de ces deux nœuds.

Lors d'une opération 232, le calculateur 14 affecte un poids à chaque nœud associé à la particule $S^i$. Ici, la somme des poids affectés aux nœuds associés à la même particule $S^i$ est égale au poids $w^i_{t1}$. De plus, de préférence, le poids affecté à chaque nœud est fonction de la distance qui le sépare de la position $P^i_{t1}$. Ici, les poids $w^i_{N1}$ et $w^i_{N2}$, respectivement des nœuds N1 et N2, sont pris égaux, respectivement à $(d_1 {}^*w^i_{t1})/(d_1+d_2)$ et $(d_2 {}^*w^i_{t1})/(d_1+d_2)$, où $d_1$ et $d_2$ sont les distances qui séparent la position $P^i_{t1}$, respectivement, des positions des nœuds N1 et N2.

Lors d'une opération 234, pour chaque nœud associé à la particule $S^i$, le calculateur 14 identifie le ou les nœuds avals les plus probables. Cette étape est illustrée à l'aide de la figure 8. Cette étape va maintenant être décrite dans le cas particulier du nœud N1 et du segment 212, sachant que ce qui est décrit dans ce cas particulier s'applique à l'identique aux autres nœuds associés à la particule $S^i$.

Le segment 212 est déplacé pour que son point amont soit confondu avec la position $P_{N1}$. On obtient ainsi un segment 236 représenté sur la figure 8. Le point aval du segment 236 porte la référence 238 et occupe une position $P_{238}$. Le calculateur 14 associe le point 238 au(x) nœud(s) le plus proche. Par exemple, il procède de façon identique à ce qui a été décrit lors de l'opération 230. Ici, cela conduit à associer le point 238 aux nœuds N3, N4 et N7. On considère ici que le noeud N8 est à plus de 1 m de la position $P_{238}$. En associant plusieurs nœuds avals au même nœud amont, on définit plusieurs chemins hypothétiques susceptibles d'avoir été suivis par l'appareil 10. Par exemple, dans le cas illustré ici :

- le nœud N3 correspond à un premier chemin hypothétique égal à la réunion des segments A1 et A2,
- le nœud N4 correspond à un deuxième chemin hypothétique égal à la réunion des segments A1, A2 et A3, et
- le nœud N7 correspond à un troisième chemin hypothétique égal à la réunion des segments A1, A5 et A7.

Ici, pour simplifier, le calculateur 14 sélectionne uniquement le chemin hypothétique le plus direct entre les nœuds amont et aval.

Lors d'une opération 240, le calculateur 14 affecte un poids à chaque nœud aval. Par exemple, le calculateur 14 procède comme décrit lors de l'opération 232, sauf que la somme des poids des nœuds avals est égale au poids du nœud amont. Ainsi, la somme des poids affectés aux nœuds N3, N4 et N7 est égale au poids du nœud N1. On procède aussi de la même façon pour les nœuds avals obtenus en sélectionnant le nœud N2 comme étant le nœud amont du segment 212.

Ensuite, les opérations 234 et 240 sont réitérées en prenant comme nœud amont chacun des nœuds avals identifiés lors de la précédente exécution de l'opération 234 et en utilisant le segment suivant 216 du trajet corrigé à la place du segment précédent 212.

Les opérations 234 et 240 sont réitérées jusqu'à ce que la totalité des segments du trajet corrigé ait été utilisée successivement et dans l'ordre où ils ont été relevés pendant la phase d'indisponibilité.

Une fois la réitération des opérations 234 à 240 terminée, on dispose généralement de plusieurs chemins hypothétiques susceptibles d'avoir été suivis par l'appareil 10 en partant de la position $P^i_{t1}$. Lors d'une opération 250, le calculateur 14 sélectionne alors le chemin hypothétique le plus probable. Dans le cas décrit ici, le chemin le plus probable est celui dont le nœud d'arrivée est associé au poids le plus élevé. Ce chemin sélectionné est alors le nouveau trajet corrigé obtenu à l'issue de l'étape 228.

Enfin, lors d'une étape 252, le calculateur 14 construit la position initiale $P^i_{t2}$ de la particule $S^i$ à partir de sa position $P^i_{t1}$ et du trajet corrigé obtenu à l'issue l'étape 228. Par exemple, le calculateur déplace la particule $S^i$ en suivant le trajet corrigé depuis la position $P^i_{t1}$ jusqu'à son point d'arrivée. En faisant cela, le calculateur 14 estime plusieurs valeur $P^i_w$ de la position de la particule $S^i$ à des instants $t_w$ compris dans l'intervalle $]t_1 ; t_2]$. Ici, chaque valeur $P^i_w$ correspond à un point caractéristique du nouveau trajet corrigé. La position initiale $P^i_{t2}$ est prise égale aux coordonnées, dans le repère XYZ, du point d'arrivée.

On remarque qu'en procédant ainsi, on conserve la diversité des positions $P^i_{t1}$. En effet, il est très peu probable que deux particules ayant des positions $P^i_{t1}$ différentes permettent d'obtenir des positions initiales $P^i_{t2}$ identiques.

Les étapes 200 à 252 sont appliquées à chacune des particules sélectionnées lors de l'étape 198.

De plus, avant que la phase 148 s'achève, le calculateur 14 peut aussi estimer les positions $PA_w$ de l'appareil 10 à chaque instant $t_w$ compris dans l'intervalle $]t_1$ ; $t_2[$ à partir des positions $P^i_w$ estimées pour toutes les particules $S^i$. Pour cela, par exemple, il peut procéder de la même manière que lors de l'étape 136. Dans ce cas, le poids $w^i_w$ associé à chaque position $P^i_w$ est pris égal au poids associé à la particule $S^i$. Par exemple, il s'agit du poids $w^i_{t1}$ ou $w^i_{t2}$. Dans un autre mode de réalisation simplifié, tous les poids $w^i_w$ sont pris égaux. Les positions $PA_w$ de l'appareil 10 sont, par exemple, ensuite affichées sur l'écran 28 de l'appareil 10 ce qui permet de montrer le trajet parcouru par cet appareil même pendant la phase d'indisponibilité.

A l'instant $t_2 + \Delta t_2$, l'exécution de l'algorithme 20 est terminée et la phase 148 se termine. Le calculateur 14 dispose maintenant de positions initiales $P^i_{t2}$ pour chaque particule sélectionnée. Si le nombre de particules sélectionnées est insuffisant, alors le calculateur 14 peut exécuter l'étape de ré-échantillonnage sur les particules sélectionnées pour accroître leur nombre. Cette étape de ré-échantillonnage est par exemple identique à l'étape 132.

Ensuite, le procédé retourne à la phase active 122. Pour cela, le calculateur 14 retourne à l'étape 124 et utilise en tant que précédentes positions $P^i_{k-1}$ les positions $P^i_{t2}$ obtenues à l'issue de la phase 148.

La phase 148 est exécutée à chaque fois que le calculateur 14 bascule de sa phase d'indisponibilité vers sa phase active.

La figure 9 représente l'ordonnancement dans le temps du fonctionnement des calculateurs 14 et 15 lors de l'exécution du procédé de la figure 4. Plus précisément, sur cette figure, les flèches du haut et du bas représentent les phases de fonctionnement, respectivement, des calculateurs 14 et 15.

Entre les instants $t_0$ et $t_1$ puis après l'instant $t_2$, le calculateur 14 est dans sa phase active. A l'inverse, entre les instants $t_1$ et $t_2$, le calculateur 14 est dans sa phase d'indisponibilité. La phase d'indisponibilité est représenté par une zone hachurée 260. Sur cette figure, à l'intérieur de chacune des flèches, les références numériques des étapes exécutées par, respectivement, les calculateurs 14 et 15 sont indiquées dans l'intervalle temporelle où elles sont exécutées. Les notations « 102-108 » et « 102-112 » signifie qu'il s'agit, respectivement, des étapes 102 à 108 et des étapes 102 à 112.

Différentes variantes du mode de réalisation principal vont maintenant être décrites.

Variantes sur la structure de l'appareil 10 :

La mémoire 12 peut être un ensemble de plusieurs mémoires physiques distinctes.

Dans une variante, l'appareil 10 comporte des capteurs supplémentaires capables de délivrer des informations supplémentaires sur la position de l'appareil 10. Par exemple, l'appareil 10 peut comporter un capteur GPS qui délivre une position absolue de l'appareil 10. Il peut aussi comporter un capteur capable de mesurer la position absolue de cet appareil 10 par rapport à des bornes fixes fixées sans aucun degré de liberté à l'intérieur du bâtiment 2. Ces bornes sont par exemple des émetteurs-récepteurs Wi-fi. Dans ce cas, le capteur mesure la puissance des ondes émises par ces bornes et calcule sa position par rapport à ces bornes, par exemple, par triangulation. Ensuite, cette position par rapport aux bornes est convertie en une position de l'appareil 10 dans la carte 16 à partir de la connaissance de la position de ces bornes à l'intérieur du bâtiment 2. Dans ce cas, l'algorithme 18 et/ou l'algorithme 20 peuvent, en plus des mesures de la centrale inertielle 22, utiliser des mesures de ces capteurs supplémentaires pour estimer la position $PA_k$. Par exemple, si une mesure approximative de la position de l'appareil 10 est disponible en utilisant d'autres informations, alors le poids $w^i$ est augmenté si la position $P^i_k$ est proche de cette position approximative et, au contraire, diminuée si la position $P^i_k$ est éloignée de cette position approximative.

Dans un autre mode de réalisation, la centrale inertielle comporte des capteurs plus sophistiqués qui fournissent une valeur moyenne de la variable mesurée à un instant $k$ ainsi qu'un écart-type sur cette mesure (voir par exemple Straub2010). Dans ce cas, les valeurs mesurées de l'angle $\theta_k$ et de l'amplitude $l_k$ sont obtenues en tirant au hasard les valeurs en utilisant une loi de probabilité gaussienne dont la moyenne et l'écart-type sont égaux à ceux transmis par les capteurs. Cela permet notamment de prendre en compte le bruit de mesure.

La centrale inertielle peut aussi comporter des capteurs supplémentaires tels qu'un gyroscope, un baromètre, un hydromètre, un thermomètre, un microphone, un capteur de proximité ou un capteur d'intensité lumineuse ou autres.

L'appareil 10 peut prendre la forme de n'importe quel appareil qui peut être déplacé dans l'espace par un utilisateur et dont la position relative peut être mesurée. De préférence, l'appareil 10 est un appareil transportable, directement à la main, par l'utilisateur. Il peut s'agir, en plus des exemples précédemment donnés, d'un téléphone filaire, d'un assistant digital personnel plus connu sous l'acronyme « PDA » (Personal Digital Assistant), d'une console de jeux, d'un dispositif de navigation, d'un dispositif de suivi de l'activité ou de la forme de l'utilisateur tels que ceux incorporés dans un bracelet intelligent, d'une montre intelligente, et de tout autre appareil électronique portable par l'utilisateur. Par exemple, il peut aussi s'agir d'un appareil d'accès à internet mobile connu sous l'acronyme MID (Mobile Internet Device), d'un dispositif de navigation personnel connu sous l'acronyme PND (Personal navigation device), d'un appareil photo numérique, d'une caméra vidéo, de jumelles, d'un objectif de longue focale (« telephoto lens » en anglais), d'un appareil multimédia portable pour jouer de la musique ou des vidéos ou pour écouter la radio, d'une télécommande ou d'une combinaison des appareils précédemment cités.

L'appareil 10 peut être un appareil autonome ou, au contraire, fonctionner uniquement en combinaison avec un autre appareil portable ou non. Par exemple, l'autre appareil est un ordinateur portable ou de bureau, un serveur informatique ou autre. L'autre appareil communique alors avec l'appareil 10 par l'intermédiaire d'un réseau filaire ou sans-fil. Si une communication filaire est utilisée, celle-ci peut être de n'importe quel type tel qu'une liaison série, une liaison parallèle, une transmission par parquets, etc. De façon similaire, si une liaison sans-fil est utilisée, celle-ci peut être de n'importe quel type comme une transmission sans fil via des ondes électromagnétiques ou des ondes infrarouges ou autres. Il peut aussi s'agir d'une liaison mettant en œuvre une combinaison de technologies filaire et sans-fil.

En variante, le calculateur 14 n'est pas plus puissant que le calculateur 15. Dans une autre variante, les calculateurs 14 et 15 sont intégrés à l'intérieur d'un même composant électronique, voire même, sur un même substrat en silicium. Le calculateur 14 peut se présenter sous la forme d'un regroupement de plusieurs microprocesseurs distincts. Dans ce dernier cas, l'un de ces microprocesseurs distincts est utilisé pour exécuter l'algorithme 18 et un autre pour exécuter l'algorithme 20.

Le calculateur 15 n'est pas nécessairement intégré à l'intérieur du MPU 40. En variante, le calculateur 15 est une calculateur externe au MPU 40 et raccordé par un bus externe au MPU 40. Par exemple, le calculateur 15 peut être intégré dans un capteur tel que la centrale inertielle 22. Dans ce dernier cas, lorsque le capteur comporte le calculateur 15 on parle souvent de « smart sensor ». Dans une autre variante, le calculateur 15 est composé de plusieurs microprocesseurs. Dans ce dernier cas, l'un de ces microprocesseur peut être intégré au MPU 40 pour traiter les mesures de la centrale 22 et les enregistrer dans la mémoire 44 tandis qu'un autre microprocesseur, externe au MPU 40, réalise le reste des opérations comme l'opération 114.

Dans un autre mode de réalisation, l'algorithme 20 est exécuté par un serveur distant et non pas par l'unité 11. Dans ce cas, l'unité 11 est raccordée par l'intermédiaire d'un réseau sans fil à ce serveur distant, et transmet à ce serveur distant le trajet relevé pendant la phase d'indisponibilité. En réponse, le serveur distant exécute l'algorithme 20 puis renvoie les positions $P^i_{t2}$ à l'appareil 10. Cette architecture est intéressante si le serveur distant exécute plus rapidement l'algorithme 20 que le calculateur 14.

Dans une autre variante, le calculateur 15 bascule également entre une phase active et une phase d'indisponibilité. Dans la phase active, le calculateur 15 acquiert les mesures de la centrale inertielle 22 et les traite comme décrit précédemment. Dans la phase d'indisponibilité, il n'acquiert aucune mesure de la centrale inertielle 22, et ne réalise donc pas les opérations de traitement précédemment décrites. Par contre, même dans ce cas, le calculateur 15 reste dans sa phase active, tant que l'appareil 10 doit être localisé et, en particulier, pendant les phases d'indisponibilité du calculateur 14. Par exemple, le calculateur 15 bascule dans sa phase d'indisponibilité, uniquement lorsque aucune application de localisation de l'appareil 10 n'est en cours d'exécution par le calculateur 14. Le calculateur 15 peut aussi basculé automatiquement vers sa phase d'indisponibilité dès que les capteurs de la centrale inertielle 22 sont éteints.

Variantes des étapes 102 à 112 :

En variante, les instants $t_k$ ne correspondent pas aux instants où l'utilisateur pose un pied parterre. Par exemple, les instants $t_k$ sont des instants séparés les uns des autres par une période prédéterminée. Dans ce cas, la détection des pas lors de l'étape 104 peut être omise.

Dans une autre variante, les pas sont détectés à partir des mesures d'un ou plusieurs autres capteurs comme, par exemple, les mesures du gyromètre.

Lors de l'étape 108 d'autres mesures intermédiaires supplémentaires sont établies puis exploitées ultérieurement pour augmenter la précision de la localisation. Par exemple le calculateur 15 identifie un changement de vitesse lors d'un déplacement en ligne droite ou un piétinement de l'utilisateur. Dans une variante simplifiée, l'étape 108 est omise.

Les étapes 108 et 110 peuvent être exécutées, au moins pour partie, en parallèle.

Lors de l'opération 114, l'ajout de points caractéristiques supplémentaires peut être omis. Cette opération 114 peut aussi être simplifiée en utilisant moins de conditions que celles précédemment décrites pour ajouter des points caractéristiques supplémentaires. Par exemple, seulement une seule ou deux de ces conditions choisies parmi l'ensemble des conditions précédemment décrites sont utilisées. Il est aussi possible d'ajouter d'autres points caractéristiques supplémentaires en plus de ceux déjà cités en utilisant pour cela les mesures de tout type de capteur embarqué dans l'appareil 10. Par exemple, un point caractéristique supplémentaire est ajouté dès que la variation de la direction du champ magnétique mesurée par le magnétomètre 26 franchit un seuil prédéterminé. Dans un autre exemple, un point caractéristique supplémentaire est enregistré à chaque fois qu'un changement d'étage est détecté. Ce changement d'étage est détecté, par exemple, à partir de l'accélération verticale et du baromètre de la centrale inertielle 22 et non pas à partir d'un simple changement de la direction de déplacement.

D'autres méthodes sont possibles pour détecter un point caractéristique où un changement important de direction se produit. Par exemple, un changement important de direction peut être détecté par le fait que la vitesse angulaire, mesurée par un gyromètre de l'appareil 10, dépasse un seuil prédéterminé. Un changement de direction peut aussi être détecté à partir d'une variation dans la direction du champ magnétique mesuré par un magnétomètre de l'appareil 10.

Le trajet entre deux points caractéristiques peut aussi être approximé, non pas par un segment rectiligne, mais par un polynôme de degré strictement supérieur à un, tel que par une Spline. Par exemple, le trajet entre deux points caractéristiques successifs est approximé par un polynôme de degré supérieur ou égale à deux, trois ou plus. On notera que le cas d'un polynôme de degré un correspond au mode de réalisation précédemment décrit. Le degré du polynôme peut être fixé une fois pour toute ou, au contraire, choisi dynamiquement pour minimiser une erreur d'approximation. Par exemple, le degré du polynôme utilisé pour approximer le trajet relevé entre deux points caractéristiques successifs est choisi pour que l'erreur d'approximation soit inférieure à un seuil prédéterminé. L'erreur d'approximation entre le polynôme et le trajet relevé est par exemple calculée comme une erreur quadratique. Dans ce cas, le degré du polynôme utilisé entre deux points caractéristiques donnés n'est pas nécessairement le même que celui utilisé entre deux autres points caractéristiques. Le polynôme qui approxime le trajet relevé entre deux points caractéristiques successifs peut être enregistré dans la mémoire 44 en enregistrant ses coefficients ou plusieurs des points qu'il interpole.

En variante, l'opération 114 est remplacée par une autre méthode connue d'extraction de caractéristiques dans un signal relevé entre les instants $t_1$ et $t_2$. Dans une autre variante, le trajet relevé n'est pas compressé et l'opération 114 est omise.

Le trajet compressé généré par l'opération 114 est enregistré dans la mémoire 44 en plus du trajet non-compressé relevé lors de l'étape 112 ou, au contraire, remplace dans la mémoire 44 le trajet non-compressé relevé. Dans ce dernier cas, le trajet non-compressé relevé est effacé de la mémoire 44 au moment où le trajet compressé est enregistré dans cette mémoire.

Si le trajet compressé occupent trop de place dans la mémoire 44, il est possible de prévoir que le calculateur 15 réveille le calculateur 14 pour qu'il bascule dans sa phase active et traite les données enregistrées dans la mémoire 44. Ensuite, le calculateur 14 retourne automatiquement dans sa phase d'indisponibilité et les données traitées par le calculateur 14 sont effacées de la mémoire 44. Ainsi, de l'espace mémoire est libéré pour l'enregistrement de la suite du trajet relevé et/ou du trajet compressé.

Dans une autre variante, l'étape 112 est mise en œuvre en permanence, et pas seulement lorsque le calculateur 14 est dans sa phase d'indisponibilité. Dans un mode de réalisation particulier de cette variante, le relevé du trajet est systématiquement mis en œuvre mais l'opération 114 n'est exécutée que si le calculateur 14 est dans sa phase d'indisponibilité.

Le mode de réalisation principal a été décrit dans le cas particulier où, pendant la phase d'indisponibilité, le calculateur 15 met en œuvre un premier algorithme de compression pour obtenir les mesures intermédiaires puis met en œuvre, sur ces mesures intermédiaires, un deuxième algorithme de compression pour obtenir les caractéristiques enregistrées dans la mémoire 44. De nombreux autres algorithmes de compressions sont utilisables aussi bien à la place du premier algorithme que du deuxième algorithme. En particulier, il n'est pas nécessaire que le deuxième algorithme de compression identifie des points caractéristiques du trajet relevé pendant la phase d'indisponibilité. Par exemple, il est possible d'utiliser en tant que premier ou deuxième algorithme, des algorithmes de compression sans perte ou avec perte connus comme gzip (GNU zip), le format de fichier rar, le format de fichier arc, ADPCM (Adaptive Differential Pulse Code Modulation), la compression fractale, ...etc. Dans ce cas, pendant la phase active ou pendant la phase de réveil actif, les informations ainsi compressées sont décompressées avant d'être traitées par les algorithmes 18 et 20. Dans le cas d'un deuxième algorithme de compression connue, les caractéristiques relevées sont, par exemple, les caractéristiques redondantes qui apparaissent en plusieurs exemplaires dans les mesures acquises et dont un seul exemplaire est conservé après compression.

En variante, le deuxième algorithme de compression relève les caractéristiques à enregistrer directement à partir des mesures acquises des capteurs sans passer par l'intermédiaire des mesures intermédiaires. Par exemple, dans ce cas, les premier et deuxième algorithmes sont les mêmes saufs que le taux de compression est plus faible quand cette algorithme est utilisé en tant que premier algorithme que quand il est utilisé en tant que deuxième algorithme. Les premier et deuxième algorithmes peuvent aussi être différents. Dans ce dernier cas, par exemple, le premier algorithme présente un taux de compression inférieur à celui du deuxième algorithme.

Variantes de l'étape 120 et de la phase active 122 :

L'étape 120 d'initialisation de l'algorithme 18 peut être réalisée différemment. Par exemple, la position initiale de l'appareil 10 dans le bâtiment 2 est initialisée en tenant compte de la dernière position absolue mesurée à l'aide d'un GPS ou à partir de bornes Wifi.

L'algorithme 18 peut être un autre algorithme qu'un filtre particulaire. Par exemple, l'algorithme 18 peut être un filtre de Kalman utilisé pour estimer la position soit de chaque particule, soit directement de l'appareil 10. L'algorithme 18 peut aussi être remplacé par un algorithme IMM (Interactive Multiple Models).

Dans le cas où l'algorithme 18 est un filtre particulaire, d'autres modèles de déplacement sont possibles. Par exemple, la distance parcourue entre deux positions $P^i_{k-1}$ et $P^i_k$ peut être obtenue en intégrant l'accélération mesurée pour obtenir la vitesse de déplacement entre ces deux positions, puis en intégrant cette vitesse entre les instants $t_{k-1}$ et $t_k$. Il existe également d'autres façons d'implémenter le filtre particulaire. Par exemple, on pourra se référer à ce sujet à la thèse Straub2010 ou aux demandes WO 2012158441 et US 8548738.

D'autres contraintes sur les déplacements de l'appareil 10 sont utilisables que celles précédemment décrites. Par exemple, ces autres contraintes sont identiques à celles décrites dans la demande FR1455575. Ces autres contraintes sont aussi bien utilisables lors de la phase 122 que lors de l'étape 228 pour corriger le trajet relevé. Par exemple, en variante, la carte 16 ne code pas la position des murs à l'intérieur du bâtiment 2. Au lieu de cela ou en plus, la carte 16 contient :

- une cartographie de la puissance des ondes Wifi mesurables dans différentes zones du bâtiment 2,
- une cartographie de la fréquentation mesurée dans différentes zones du bâtiment 2,
- une cartographie des niveaux sonores ou des ambiances sonores présents dans différentes zones du bâtiment 2,
- une cartographie de l'amplitude des champs magnétiques mesurables dans différentes zones du bâtiment 2.

De tels cartes sont utilisables comme décrit précédemment dans le cas particulier de la carte 16. Par exemple, l'appareil 10 mesure la puissance des ondes Wifi ou la fréquentation ou le niveaux sonores ou l'ambiance sonore ou l'amplitude du champ magnétique avant et après avoir été déplacé d'un pas. Si d'après ces mesures ce déplacement a fait passer l'appareil 10 d'une zone de la carte à une autre, alors le poids associé à toutes les particules $S^i$ pour lesquels les positions $P^i_{k-1}$ et $P^i_k$ sont restées dans la même zone est diminué. A l'inverse le poids des particules $S^i$, pour lesquels les positions $P^i_{k-1}$ et $P^i_k$ se trouvent dans des zones différentes de la carte susceptibles de correspondre au déplacement mesuré par l'appareil 10, est soit augmenté soit laissé inchangé.

Lors de l'étape 124, le calculateur 14 peut recevoir des données supplémentaires relatives au déplacement de l'appareil 10 pour calculer le déplacement de chaque particules $S^i$. Par exemple, le calculateur 14 peut recevoir plusieurs angles utiles pour déterminer la direction $\theta_k$ tels que :

- un angle d'orientation de l'appareil 10,
- un angle de correction entre l'orientation de l'appareil 10 et la direction de la marche, plus connu sous le terme anglais de « Misalignement angle », ou
- un angle, mesuré à l'aide du magnétomètre, entre un repère dans lequel est calculé le trajet relevé et un repère de référence.

Lors de l'étape 124, le déplacement peut aussi être donné sous la forme d'une vitesse $v_x$, $v_y$ ou sous la forme d'incréments de position $\Delta x$, $\Delta y$.

Des informations additionnelles peuvent être transmises au calculateur 14 lors de cette étape 124 tels qu'un indicateur de changement de position de l'appareil 10, un indicateur de piétinement, la pression atmosphérique, etc.

Lors de l'étape 126, les lois $Lp_{xy}$, $Lp_\alpha$ et $Lp_\varepsilon$ peuvent être modifiées en fonction des informations additionnelles transmises par le calculateur 15 lors de l'étape 124. Par exemple, si un changement de position de l'appareil 10 est détecté, la dispersion de la loi $Lp_\alpha$ est augmentée.

D'autres méthodes de ré-échantillonnage peuvent être mises en œuvre lors de l'étape 132. Par exemple, toutes les particules $S^i$ sont ré-échantillonnées lors de cette étape et non pas seulement une partie. Lors du ré-échantillonnage des particules, de nombreux autres algorithmes pour déterminer la position initiale des particules régénérées sont connus et peuvent être utilisés à la place de celui décrit précédemment. Par exemple, l'algorithme KLD (Kullbak-Leibler-Divergence) peut être utilisé. L'étape de ré-échantillonnage peut aussi être omise.

Variantes sur le passage entre les phases 122 et 148 :

En variante, c'est le calculateur 14 qui indique au calculateur 15 qu'il va passer dans sa phase d'indisponibilité. Dans ce cas, le calculateur 15 n'a pas besoin d'interroger le calculateur 14 pour déterminer s'il est ou non dans sa phase d'indisponibilité.

D'autres causes que la mise en veille peuvent provoquer l'interruption de l'exécution de l'algorithme 18 par le calculateur 14 et le passage dans la phase d'indisponibilité. Quelle que soit la cause qui provoque l'interruption momentanée de l'exécution de l'algorithme 18 par le calculateur 14, cette cause peut être traitée comme décrit ci-dessus. Ainsi, lorsque cette cause disparaît et que le calculateur 14 est de nouveau capable d'exécuter l'algorithme 18, il peut être correctement initialisé en exécutant la phase 148 de réveil actif. Par exemple, dans un mode de réalisation particulier, le calculateur 14 bascule vers la phase d'indisponibilité lorsqu'il est trop occupé pour exécuter l'algorithme 18. Dès lors, lorsque le calculateur 14 est de nouveau disponible pour exécuter l'algorithme 18, la phase 148 est exécutée et l'algorithme 18 est correctement initialisé. De façon similaire, lorsque l'algorithme 18 est exécuté sur un serveur distant, la cause qui provoque l'arrêt de l'exécution de l'algorithme 18 peut être une interruption de la liaison entre l'appareil 10 et ce serveur distant.

Variantes de la phase 148 de réveil actif :

En variantes, l'algorithme 20 est identique à l'algorithme 18, sauf que l'algorithme 20 est exécuté hors ligne et qu'il traite le trajet compressé et non pas directement toutes les mesures intermédiaires établies pendant la phase d'indisponibilité. Dans ce cas, il est réglé pour tenir compte du fait que les distances entre les points caractéristiques sont généralement plus grandes que la distance d'un pas. Par exemple, le nombre initial $N_0$ de particules est beaucoup plus grand lors de l'exécution de l'algorithme 20, que lorsque l'algorithme 18 est exécuté.

En variante, le calculateur 14 n'enregistre pas, avant l'instant $t_1$, la position $P^i_k$, la valeur $w^i_k$ du poids $w^i$ et les valeurs $\alpha^i_k$ et $\varepsilon^i_k$ pour toutes les particules $S^i$ mais seulement pour un nombre limité $N_1$ de particules pour limiter l'espace mémoire occupé par cet enregistrement. Par exemple, le calculateur 14 remplace chaque amas de particules par une seule particule $S^i_{t1}$ dont la position est égale au barycentre des positions $P^i_k$ de chaque particule de cet amas. Le barycentre est calculé à partir des positions $P^i_k$ de chaque particule de cet amas pondéré par le poids $w^i_k$ de cette particule. Il est aussi possible de pondérer chaque position $P^i_k$ par le même poids $w$. Un amas de particules est un groupe de particules, toutes situées à une distance inférieure à un seuil $S_a$ du barycentre de cet amas. Il est donc possible de déterminer si une particule appartient ou non à un amas et ainsi d'identifier toutes les particules qui appartiennent au même amas. Par exemple, le seuil $S_a$ est inférieur ou égal à 2m ou 1m ou 50cm. La valeur $w^i_{t1}$ poids $w^i$ de la particule $S^i_{t1}$ est calculé à partir des poids $w'$ de toutes les particules $S^i$ appartenant à cet amas. Par exemple, le poids $w^i_{t1}$ est égal à la moyenne des valeurs $w^i_k$ des poids des particules appartenant à cet amas.

Dans un mode de réalisation très simplifié, le calculateur 14 enregistre seulement la position $PA_k$ estimée immédiatement avant l'instant $t_1$ en tant que position $P^i_{t1}$. Dans ce cas, il n'existe donc qu'une seule position $P^i_{t1}$.

En variante, les poids $w^i$ sont réinitialisés à la sortie de la phase d'indisponibilité. Par exemple, on affecte la même valeur $w^i_{t2}$ à tous les poids $w^i$. Typiquement, cette valeur est prise égale à $1/N_2$, où $N_2$ est le nombre de particules $S^i$ à l'instant $t_2 + \Delta t_2$. La valeur $w^i_{t2}$ peut aussi être calculée en fonction de la valeur $w^i_{t1}$ et du poids du nœud d'arrivée du chemin le plus probable utilisé pour construire la position $P^i_{t2}$.

À la sortie de la phase d'indisponibilité, il est aussi possible de réinitialiser les valeurs des facteurs correctifs $\alpha^i$ et $\varepsilon^i$ comme décrit lors de l'étape 100.

L'étape 198 peut être omise. Dans ce cas, toutes les particules $S'$ enregistrées à l'instant $t_1$ sont utilisées. Dans un autre mode de réalisation, l'étape 198 est réalisée juste avant l'étape 134 d'enregistrement. Puis, lors de l'étape 134, seule les données des particules sélectionnées lors de l'étape 198 sont enregistrées. Dans ce cas, l'étape 198 n'est généralement pas réalisée une nouvelle fois au début de la phase 148.

Pour simplifier le procédé, l'étape 200 peut être omise. Dans ce cas, le trajet relevé pendant la phase d'indisponibilité est corrigé uniquement par l'exécution de l'étape 228.

Dans un autre mode de réalisation, lors de l'étape 200, seul l'un des facteurs correctifs $\alpha^i$ et $\varepsilon^i$ est utilisé pour corriger le trajet relevé et non pas les deux. Dans une autre variante, le trajet est corrigé en tenant compte de toutes les valeurs $\alpha^i_{t1}$ et $\varepsilon^i_{t1}$ de toutes les particules $S^i$. Par exemple, le trajet est corrigé à partir de la moyenne de toutes les valeurs $\alpha^i_{t1}$ et de la moyenne de toutes les valeurs $\varepsilon^i_{t1}$. Cette moyenne peut être pondérée avec les poids $w^i_{t1}$ de chaque particule $S^i$. Dans ce cas, le trajet corrigé est le même pour toutes les particules $S^i$.

Lors de l'étape 250, plutôt que de sélectionner seulement le chemin le plus probable, le calculateur 14 sélectionne les $N_{ch}$ chemins les plus probables, où $N_{ch}$ est un entier strictement supérieur à 1 et généralement inférieur à 5 ou 3. Ensuite, l'étape 252 est appliquée pour chacun de ces $N_{ch}$ chemins les plus probables. On initialise ainsi les positions $P^i_{t2}$ de $N_{ch}$ particules à partir d'une seule particule $S_i$ dont la position $P^i_{t1}$ a été enregistrée.

La position $P^i_{t2}$ d'une particule à l'instant $t_2$ n'est pas nécessairement confondue avec la position du point d'arrivée du trajet relevé. Par exemple, elle peut aussi être construite en ajoutant les variables aléatoires $\mu^i_x$ et $\mu^i_y$ aux coordonnées de la position du point d'arrivée de ce trajet. Dans un autre mode de réalisation, on peut aussi ajouter les variables aléatoires $\mu^i_x$ et $\mu^i_y$ aux coordonnées du point de départ du trajet utilisé.

Dans une autre variante de la phase 148, pour obtenir les positions $P^i_{t2}$, le calculateur 14 fait parcourir à chaque particule $S'$ dont la position a été enregistrée juste avant l'instant $t_1$, le trajet relevé pendant la phase d'indisponibilité sans exécuter l'étape 228. Ainsi, lors de ce parcours, le calculateur 14 ne tient pas compte des obstacles infranchissables. L'algorithme 20 n'utilise donc pas le graphe 150 des trajets possibles. Les positions de ces particules $S^i$ après qu'elles aient parcouru le trajet relevé pendant la phase d'indisponibilité sont alors considérées comme étant les positions $P^i_{t2}$ nécessaires à l'initialisation de l'algorithme 18 à l'instant $t_2 + \Delta t_2$.

Dans une autre variante, les nœuds du graphe 150 ne sont pas uniformément répartis dans le bâtiment 2. Par exemple, le graphe 150 comporte un seul nœud par pièce ou par intersection entre deux pièces.

En variante, pour limiter le nombre d'opérations réalisées lors de l'exécution de l'algorithme 20, celui-ci est modifié pour :

- arrêter d'explorer un chemin hypothétique dès que le poids associé à un nœud aval de ce chemin hypothétique devient inférieur à un seuil prédéterminé et cela avant que tous les segments du trajet corrigé aient été utilisés, et/ou
- limiter le nombre de nœuds avals que le calculateur 14 peut identifier, par exemple, à un seul nœud aval, et/ou
- remplacer dans le trajet corrigé les segments dont la longueur est inférieure à un seuil prédéterminé par un seul point caractéristique, par exemple situé au milieu de ce segment court, et/ou
- appliquer l'algorithme 20 uniquement aux particules dont le poids est strictement supérieur à un seuil prédéterminé, et/ou
- appliquer l'algorithme 20 uniquement aux particules qui sont espacées les unes des autres d'une distance supérieure à un seuil prédéterminé, et/ou
- fusionner plusieurs segments du trajet corrigé en un seul segment.

La phase 148 peut aussi être exécutée en parallèle de la phase 122, c'est-à-dire en même temps que le calculateur 14 est dans sa phase active et exécute l'algorithme 18. Dans ce cas, les positions estimées par l'exécution de l'algorithme 20 sont combinées aux positions estimées pour le même instant tk par l'algorithme 18 de manière à améliorer la précision de l'estimation de la position de l'appareil 10. Par exemple, la phase 148 est exécutée à intervalle régulier en parallèle de la phase 122.

Autres variantes :

Le lancement de l'exécution du procédé de la figure 4 peut être déclenché automatiquement, par exemple, en réponse à la perte d'un signal GPS ou en réponse à la mesure d'un signal Wifi.

La position estimée $PA_k$ n'est pas nécessairement affichée mais, en variante, seulement transmise à un autre appareil pour traitement de cette information.

Tout ce qui a été précédemment décrit s'applique également au cas où le piéton 4 est remplacé par une personne équipée d'un véhicule roulant comme un vélo, un chariot ou une poussette ou encore un fauteuil roulant. L'appareil 10 est alors soit transporté par cette personne soit directement déposé sur le véhicule roulant. Dans ce cas, l'accéléromètre 24 peut être remplacé par un compte-tour qui mesure le nombre de tours de roue du véhicule roulant au fur et à mesure que cette personne se déplace dans le bâtiment 2.

Le procédé précédemment décrit s'applique à tout type d'espace tridimensionnel ou bidimensionnel où l'appareil 10 peut être déplacé. Par exemple, il peut aussi s'agir d'un espace situé en plein air et en dehors de tout bâtiment. Par exemple, ce procédé est utile pour localiser une personne dans un lieu où une localisation par GPS ou à partir de relais téléphonique est impossible.

L'utilisation de points caractéristiques supplémentaires, telle que décrite précédemment, peut être mise en œuvre indépendamment des différentes étapes décrites pour initialiser l'algorithme 18 à la sortie de la phase d'indisponibilité. Par exemple, l'algorithme 20 peut être utilisé dans un appareil mobile dont les calculateurs ne basculent jamais dans une phase d'indisponibilité.

Autres applications :

On notera que les enseignements précédemment décrits dans le cadre d'un appareil et d'un procédé de localisation de cet appareil déplacé à l'intérieur d'un espace tridimensionnel peuvent également être mis en œuvre dans le cadre d'autres applications. Notamment, ces enseignements s'appliquent à tout appareil muni d'un ou de plusieurs capteurs délivrant des mesures, l'appareil étant associé à au moins un calculateur de mesure et un calculateur d'applications. Le calculateur de mesure, généralement embarqué dans l'appareil et directement connecté aux capteurs, est programmé pour fonctionner dans un mode « temps réel » et, en alternance, dans un mode de stockage. Dans le mode temps réel, le calculateur de mesure transfert, au fur et à mesure qu'elles sont établies, les mesures intermédiaires à destination du calculateur d'application. Dans le mode de stockage, le calculateur de mesure relève et enregistre, dans une mémoire qui lui est associée, des caractéristiques extraites des signaux mesurés par le ou les capteurs pour limiter le nombre d'informations à enregistrer et à traiter par le calculateur d'applications.

Le calculateur d'application bascule, automatiquement ou en réponse à une commande transmise par un utilisateur, entre une phase active et une phase d'indisponibilité. Dans sa phase active, le calculateur d'application est apte à traiter les nouvelles mesures intermédiaires transmises par le calculateur de mesure au fur et à mesure qu'elles sont reçues. A l'inverse, dans sa phase d'indisponibilité, le calculateur d'application n'est pas capable de traiter les nouvelles mesures au fur et à mesure qu'elles lui sont transmises. De plus, le calculateur d'applications est programmé pour, lorsqu'il est dans sa phase active :

- exécuter un premier algorithme qui le conduit à recevoir les mesures intermédiaires transférées en temps réel par le calculateur de mesure et à les traiter au fur et à mesure de leur réception pour estimer en temps réel une nouvelle valeur d'une donnée, et, en alternance,
- exécuter un second algorithme qui le conduit à traiter les caractéristiques extraites, par le calculateur de mesure, pendant la phase d'indisponibilité, pour en déduire une valeur de cette même donnée mais à partir des caractéristiques relevées pendant cette phase d'indisponibilité.

Dans ce cas plus général, le procédé de traitement des mesures s'articule comme décrit en référence à la figure 10. Initialement, lors d'une étape 280, le calculateur de mesure acquière les nouvelles mesures réalisées par le ou les capteurs et enregistrent les mesures intermédiaires établies à partir de ces mesures dans une mémoire telle que la mémoire 44.

Ensuite, lors d'une étape 282, le calculateur de mesure détermine si le calculateur d'applications est dans sa phase d'indisponibilité ou non. S'il est déterminé que le calculateur d'applications est dans sa phase d'indisponibilité, alors le calculateur de mesure procède à une étape 284. Dans le cas contraire, le calculateur procède à une étape 286.

Lors de l'étape 284, le calculateur de mesure bascule ou reste dans son mode de stockage des caractéristiques extraites des mesures du ou des capteurs. En effet, il ne peut pas dans ce cas transmettre les nouvelles mesures intermédiaires au calculateur d'application au fur et à mesure qu'elles sont réalisées. Lors de l'étape 284 le calculateur de mesure enregistre, par unité de temps, moins d'informations dans la mémoire 44 que pendant la phase active. Ainsi, lors de l'étape 284 le niveau de compression des mesures du ou des capteurs est plus élevé que le niveau de compression de ces mêmes mesures pendant la phase active.

Lors de l'étape 286, le calculateur de mesure détermine si le calculateur d'application vient juste de sortir de sa phase d'indisponibilité et revient à sa phase active. Dans l'affirmative, il procède à une étape 288. Dans le cas contraire, il procède à une étape 290.

Lors de l'étape 288, le calculateur de mesure transmet les caractéristiques enregistrées lors de l'étape 284 au calculateur d'application. Ensuite, toujours lors de cette étape 288, le calculateur d'application exécute une phase de réveil actif lors de laquelle il traite les caractéristiques reçues de façon à estimer une valeur d'une donnée à un instant $t_w$ compris dans l'intervalle de temps $]t_1 ; t_2]$. L'intervalle de temps $]t_1 ; t_2]$ est l'intervalle de temps compris entre les instants $t_1$ et $t_2$ et qui comprend l'instant $t_2$ mais qui ne comprend pas l'instant $t_1$. Comme précédemment, les instants $t_1$ et $t_2$ sont, respectivement, l'instant où le calculateur d'application bascule dans sa phase d'indisponibilité et l'instant où le calculateur d'application revient dans sa phase active. On notera que l'instant $t_w$ n'est pas nécessairement égale à l'instant $t_2$. Par exemple, il peut être utile d'avoir la position de l'appareil 10 à un instant intermédiaire entre les instants $t_1$ et $t_2$.

Ensuite, une fois la phase de réveil actif terminée, le procédé retourne à l'étape 280.

Lors de l'étape 290, le calculateur est dans sa phase active et la phase de réveil actif est terminée. Dans ce dernier cas, le calculateur de mesure est dans son mode temps réel et le calculateur d'application exécute un algorithme qui traite les nouvelles mesures intermédiaires au fur et à mesure qu'elles sont reçues. Dans son mode temps réel, le calculateur de mesure enregistre, par unité de temps, plus d'informations dans la mémoire 44 que lors de l'étape 284. Ainsi, lors de la phase active, le niveau de compression des mesures du ou des capteurs est moins élevé que le niveau de compression de ces mêmes mesures pendant la phase d'indisponibilité.

A titre d'exemple, les capteurs sont des capteurs permettant le suivi de l'activité humaine. Par exemple, ces capteurs mesurent les déplacements et l'orientation du corps de la personne et/ou les déplacements des membres de cette personne les uns par rapport aux autres. Dans ce cas la donnée dont les valeurs successives doivent être estimées à partir des mesures des capteurs est une donnée représentative d'une activité humaine telle que s'asseoir, marcher, courir, dormir ou autres. La mise en œuvre du procédé de la figure 10 dans ce contexte permet au calculateur d'application d'estimer l'activité de la personne en prenant en compte des caractéristiques relevées pendant sa phase d'indiponibilité. De plus, dans ce type d'application, le passage de la phase d'indisponibilité à la phase active du calculateur d'application peut être déclenchée par la détection, par le calculateur de mesure, d'une caractéristique associée à un mouvement de la personne reflétant son réveil, par exemple un mouvement d'un bras d'une amplitude dépassant un seuil prédéterminé.

Dans un autre exemple d'application, le capteur électronique est un capteur audio qui mesure un signal audio audible dans l'environnement immédiat de l'appareil. Dans ce cas, les premier et second algorithmes sont, par exemple, des algorithmes de reconnaissance vocale et les valeurs de la donnée qui doivent être estimées correspondent à des mots successivement prononcés par un être humain. Le premier algorithme effectue la reconnaissance vocale au fur et à mesure que les nouvelles mesures du capteur sont reçues. Le second algorithme est quant à lui conçu pour identifier des mots à partir de certaines caractéristiques, comme par exemple, un spectre de fréquences ou l'intensité du signal audio à certaines fréquences prédéterminées. Dans ce cas, lors de la phase d'indisponibilité, le calculateur de mesure est programmé pour extraire du signal audio mesuré les caractéristiques nécessaires à la reconnaissance vocale par le second algorithme. Par exemple, ces caractéristiques sont les intensités du signal audio aux fréquences prédéterminées. A l'issue de la phase d'indisponibilité, pendant la phase de réveil actif, le calculateur d'application exécute le second algorithme pour identifier des mots prononcés juste avant ou au moment où ce calculateur d'application est revenu dans sa phase active. Ensuite, suite au retour dans la phase active, le calculateur d'application exécute à nouveau le premier algorithme pour reconnaître les mots suivants à partir des mesures qui lui sont transmises par le calculateur de mesure.

Dans une autre variante, le premier algorithme utilise les mots précédemment reconnus pour reconnaître les mots suivants. Dans ce cas, les mots prononcés pendant la phase d'indisponibilité et identifiés pendant la phase de réveil actif suite à l'exécution du second algorithme sont utilisés, lors de la première exécution suivante du premier algorithme, pour aider à la reconnaissance des mots dans le signal audio mesuré après le retour à la phase active. Par exemple, le premier algorithme utilise, en plus des nouvelles mesures du signal audio, la connaissance des mots précédemment identifiés par le second algorithme pour affiner et augmenter la fiabilité de la reconnaissance des mots suivants. En effet, il est connu qu'il est plus facile d'identifier un mot lorsqu'on connaît le contexte dans lequel il a été prononcé plutôt qu'en absence de toute information sur ce qui s'est dit juste avant.

**Revendications**

1. Procédé de traitement des mesures d'au moins un capteur électronique, logé dans un appareil portable par un utilisateur, afin d'en déduire les valeurs d'une donnée à des instants successifs dans le temps, dans lequel :

   - pendant une phase active :

      - un premier calculateur acquiert (104), à des instants $t_a$, les mesures dudit au moins un capteur électronique, puis établit (108), à chaque instant tk une mesure intermédiaire à partir des mesures acquises aux instants $t_a$, sur une même période de temps les instants $t_k$ étant moins nombreux que les instants $t_a$ de sorte que le premier calculateur réalise ainsi, pendant la phase active, une première compression des mesures dudit au moins un capteur,
      - à chaque instant $t_k$, un deuxième calculateur exécute (122 ; 290) un premier algorithme d'estimation d'une nouvelle valeur $P^i_k$ de la donnée, cette exécution comprenant :

         • la réception (124) d'une nouvelle mesure intermédiaire établie par le premier calculateur pour cet instant $t_k$, cette nouvelle mesure intermédiaire étant plus récente que la mesure intermédiaire reçue lors de la précédente exécution du premier algorithme, puis
         • l'estimation (126 - 132) de la nouvelle valeur $P^i_k$ de la donnée à partir de la nouvelle mesure intermédiaire reçue,

   - à un instant $t_1$, l'arrêt de la phase active et le passage dans une phase d'indisponibilité qui dure plusieurs instants $t_k$ et pendant laquelle l'exécution par le deuxième calculateur du premier algorithme est inhibée,
   - pendant la phase d'indisponibilité, le premier calculateur continue d'acquérir (102 ; 280), à chaque instant $t_a$, les mesures de la grandeur physique réalisées par le capteur électronique pendant cette phase d'indisponibilité,

   **caractérisé en ce que** :

   - pendant la phase d'indisponibilité, le premier calculateur :

      • relève (114 ; 284) des caractéristiques du signal mesuré par le capteur électronique à partir de ces nouvelles mesures acquises pendant cette phase d'indisponibilité, et
      • enregistre (114 ; 284) ces caractéristiques, le nombre de caractéristiques relevées pendant la phase d'indisponibilité étant strictement inférieur au nombre de mesures intermédiaires qu'établit, lors de la phase active, le premier calculateur pendant une période de même durée que cette phase d'indisponibilité de sorte que le premier calculateur réalise ainsi, pendant la phase d'indisponibilité, une deuxième compression des mesures dudit au moins un capteur avec un taux de compression plus élevé que lors de la phase active,

   - à un instant $t_2$, l'arrêt de la phase d'indisponibilité et le passage dans une phase de réveil actif lors de laquelle le deuxième calculateur exécute (148) un second algorithme d'estimation d'une valeur $P^i_w$ de la donnée à un instant $t_w$ compris dans l'intervalle $]t_1 ; t_2]$ à partir des caractéristiques relevées et enregistrées pendant la phase d'indisponibilité par le premier calculateur, puis
- l'arrêt de la phase de réveil actif et le retour à la phase active.

2. Procédé selon la revendication 1, dans lequel :

   - pendant la phase active, l'estimation (126 - 132) de la nouvelle valeur $P^i_k$ de la donnée est réalisée à partir de la nouvelle mesure intermédiaire reçue et en fonction des mesures intermédiaires reçues uniquement avant l'instant $t_k$, et
   - pendant la phase de réveil actif, le second algorithme exécuté est différent du premier algorithme en ce qu'il estime la valeur $P^i_w$ pour un instant $t_w$ compris dans l'intervalle $]t_1 ; t_2[$ à partir de caractéristiques relevées pendant la phase d'indisponibilité à la fois avant et après l'instant $t_w$.

3. Procédé selon la revendication 1 ou 2, dans lequel :

   - lors de la phase active, l'estimation (126 - 132) de la nouvelle valeur $P^i_k$ de la donnée est réalisée à partir de la nouvelle mesure intermédiaire reçue et également à partir de la précédente valeur $P^i_{k-1}$ de la donnée estimée lors de la précédente exécution du premier algorithme à l'instant $t_{k-1}$, et
   - lors de la première exécution du premier algorithme après l'arrêt de la phase de réveil actif, la précédente valeur $P^i_{k-1}$ de la donnée nécessaire pour estimer la nouvelle valeur $P^i_k$ de la donnée est construite à partir de la valeur $P^i_w$ fournie par l'exécution du second algorithme d'estimation pendant la phase de réveil actif.

4. Procédé selon la revendication 3, dans lequel :

   - le capteur électronique comporte une centrale inertielle embarquée dans l'appareil portable et la grandeur physique mesurée par cette centrale inertielle est représentative de la direction de déplacement de l'appareil et de l'amplitude de ce déplacement entre un instant précédent $t_{k-1}$ et l'instant $t_k$,
   - chaque mesure intermédiaire comporte la direction $\theta_k$ et de l'amplitude $l_k$ du déplacement de l'appareil entre les instants $t_{k-1}$ et $t_k$,
   - la donnée est la localisation de l'appareil portable à l'intérieur d'un espace et chaque valeur de la donnée comporte au moins une position $P^i_k$ possible de l'appareil à l'intérieur de cet espace,
   - le premier et le second algorithmes d'estimation sont des algorithmes d'estimation d'au moins une position possible $P^i_k$ de l'appareil à l'intérieur de cet espace,
   - à chaque instant $t_k$, l'exécution (122) du premier algorithme, par le deuxième calculateur, génère au moins une position possible $P^i_k$ à partir d'au moins une position possible $P^i_{k-1}$ estimée à l'aide de ce premier algorithme à l'instant précédent $t_{k-1}$,
   - avant l'instant $t_1$, au moins une dernière position possible $P^i_{t1}$ est construite à partir de la position possible $P^i_k$ générée à l'instant $t_k$ précédent immédiatement l'instant $t_1$, puis enregistrée,
   - pendant la phase d'indisponibilité, les caractéristiques relevées comportent une suite temporellement ordonnée de points caractéristiques d'un trajet parcouru par l'appareil pendant la phase d'indisponibilité, cette suite de points caractéristiques constituant un relevé du trajet parcouru par l'appareil pendant la phase d'indisponibilité,
   - pendant la phase de réveil actif, l'exécution (148) du second algorithme estime au moins la valeur $P^i_{t2}$ à l'instant $t_2$ à partir de la dernière position construite $P^i_{t1}$ et du trajet parcouru relevé pendant la phase d'indisponibilité, cette valeur $P^i_{t2}$ à l'instant $t_2$ étant appelée « position initiale $P^i_{t2}$», et
   - lors de la première exécution du premier algorithme après l'instant $t_2$, la position précédente $P^i_{k-1}$ est construite à partir de la position initiale $P^i_{t2}$ .

5. Procédé selon la revendication 4, dans lequel :

   - à chaque instant $t_k$, l'exécution (122) du premier algorithme, par le deuxième calculateur, génère plusieurs positions possibles $P^i_k$ à partir de plusieurs positions possibles $P^i_{k-1}$ estimées à l'aide de ce premier algorithme à l'instant précédent $t_{k-1}$,
   - avant l'instant $t_1$, plusieurs positions possibles $P^i_{t1}$ différentes sont construites à partir des positions possibles $P^i_k$ générées à l'instant $t_k$ précédent immédiatement l'instant $t_1$, puis enregistrées,
   - pendant la phase de réveil actif, l'exécution (148) du second algorithme génère plusieurs positions initiales $P^i_{t2}$, pour cela chaque position initiale $P^i_{t2}$ est estimée à partir d'une dernière position construite $P^i_{t1}$ respective et du trajet parcouru relevé pendant la phase d'indisponibilité, et
   - lors de la première exécution du premier algorithme après l'instant $t_2$, chaque position précédente $P^i_{k-1}$ est

construite à partir d'une position initiale possible $P^i_{t2}$ respective.

6. Procédé selon la revendication 5, dans lequel la construction desdites plusieurs dernières positions initiales $P^i_{t1}$ comporte :

- la sélection (198) de M positions les plus probables de l'appareil à partir de poids associés aux positions estimées $P^i_k$ générées à l'instant $t_k$ précédent immédiatement l'instant $t_1$, où M est un entier supérieur à deux et strictement inférieur au nombre de positions possibles $P^i_k$ générées par l'exécution (122) du premier algorithme à l'instant $t_k$ précédent immédiatement l'instant $t_1$, et chaque poids associé à une position possible $P^i_k$ respective représente la probabilité que l'appareil se trouve dans cette position $P^i_k$, puis
- l'enregistrement en tant que dernières positions possibles $P^i_{t1}$ des seules M positions les plus probables identifiées.

7. Procédé selon la revendication 4 ou 5, dans lequel l'exécution (148) du second algorithme comporte :

- la correction (228) du trajet relevé pendant la phase d'indisponibilité à l'aide d'un jeu de contraintes prédéfinies sur les déplacements de l'appareil dans l'espace, cette correction comportant des modifications des distances entre les points caractéristiques du trajet relevé et des modifications des amplitudes des changements de direction au niveau de ces points caractéristiques du trajet relevé pour obtenir un trajet corrigé qui n'enfreint aucune des contraintes prédéfinies, chaque modification étant réalisée en tenant compte aussi bien des points caractéristiques situés en amont qu'en aval du point caractéristique affecté par cette modification de la distance ou de l'amplitude du changement de direction, puis
- la construction (252) de l'estimation de la position initiale $P^i_{t2}$ comporte :

  • le positionnement de l'origine du trajet corrigé en fonction de la dernière position $P^i_{t1}$ estimée par l'exécution du premier algorithme, puis
  • l'obtention de la position $P^i_{t2}$ à partir de la position du point d'arrivée du trajet corrigé lorsque l'origine de ce trajet corrigé a été ainsi positionnée.

8. Procédé selon la revendication 4 ou 5, dans lequel :

- à chaque instant $t_k$, le premier algorithme calcule (126) également la valeur d'un facteur correctif d'un biais de mesure affectant l'un des capteurs embarqués à l'intérieur de l'appareil, et
- le procédé comporte la correction (200) du trajet parcouru relevé pendant la phase d'indisponibilité pour obtenir un trajet corrigé, cette correction étant réalisée en appliquant aux mesures intermédiaires issues de ce capteur embarqué le facteur correctif calculé à l'instant $t_k$ précédent immédiatement l'instant $t_1$, puis
- la position $P^i_{t2}$ est estimée en utilisant ce trajet corrigé.

9. Procédé selon l'une quelconque des revendications précédentes, dans lequel :

- le capteur électronique comporte une centrale inertielle embarquée dans l'appareil portable et la grandeur physique mesurée par cette centrale inertielle est représentative de la direction de déplacement de l'appareil et de l'amplitude de ce déplacement entre un instant précédent $t_{a-1}$ et l'instant $t_a$,
- chaque mesure intermédiaire comporte la direction $\theta_k$ et de l'amplitude $l_k$ du déplacement de l'appareil entre les instants $t_{k-1}$ et $t_k$,
- la donnée est la localisation de l'appareil portable à l'intérieur d'un espace et chaque valeur de la donnée comporte au moins une position $P^i_k$ possible de l'appareil à l'intérieur de cet espace,
- le premier et le second algorithmes d'estimation sont des algorithmes d'estimation d'au moins une position possible $P^i_k$ de l'appareil à l'intérieur de cet espace,
- pendant la phase d'indisponibilité, les caractéristiques relevées comportent des points caractéristiques d'un trajet parcouru par l'appareil pendant cette phase d'indisponibilité, le relevé (114) des caractéristiques du signal mesuré comportant à cet effet:

  • l'identification, à partir des nouvelles mesures intermédiaires établies par le premier calculateur pendant la phase d'indisponibilité, de points caractéristiques du trajet moins nombreux que les nouvelles mesures intermédiaires établies pendant la phase d'indisponibilité, et
  • pour chaque paire de points caractéristiques identifiés successifs le long du trajet, l'approximation du trajet de l'appareil entre ces deux points caractéristiques par un polynôme dont les coefficients sont déterminés.

10. Procédé selon la revendication 9, dans lequel l'identification de points caractéristiques du trajet comporte l'identification, en tant que point caractéristique du trajet, de chaque point où l'amplitude d'un changement de direction de déplacement de l'appareil dépasse un seuil prédéterminé.

11. Procédé selon la revendication 10, dans lequel l'identification de points caractéristiques du trajet comporte également l'identification d'un point caractéristique supplémentaire à chaque fois qu'au moins l'une des conditions suivantes est satisfaite :

- la distance parcourue depuis le dernier point caractéristique identifié est supérieure à un seuil prédéterminé,
- l'amplitude d'une variation de pression mesurée par un capteur de pression embarqué à l'intérieur de l'appareil est supérieure à un seuil prédéterminé,
- l'amplitude d'un déplacement de l'appareil par rapport au corps d'une personne qui transporte manuellement l'appareil est supérieure à un seuil prédéterminé, ou
- le temps écoulé depuis le dernier point caractéristique identifié est supérieur à un seuil prédéterminé.

12. Procédé selon l'une quelconque des revendications 4 à 8, dans lequel, lorsqu'il est exécuté par le deuxième calculateur, le premier algorithme estime (126 - 132) la position $P^i_k$ de l'appareil en utilisant un jeu de contraintes prédéfinies sur les déplacements de l'appareil dans l'espace.

13. Support (12) d'enregistrement d'informations, **caractérisé en ce qu'**il comporte des instructions pour exécuter un procédé conforme à l'une quelconque des revendications précédentes, lorsque ces instructions sont exécutées par un calculateur électronique.

14. Unité électronique de traitement des mesures d'au moins un capteur électronique afin d'en déduire les valeurs d'une donnée à des instants successifs dans le temps, cette unité comportant au moins un premier et un deuxième calculateurs électroniques (14, 15), dans lequel :

- le premier calculateur (15) est programmé pour, pendant une phase active, acquérir, à des instants $t_a$, les mesures dudit au moins un capteur électronique, puis établir, à chaque instant tk une mesure intermédiaire à partir des mesures acquises aux instants $t_a$, sur une même période de temps les instants tk étant moins nombreux que les instants $t_a$ de sorte que le premier calculateur réalise ainsi, pendant la phase active, une première compression des mesures dudit au moins un capteur,
- le deuxième calculateur (14) est programmé pour :

    • exécuter, pendant la phase active, à chaque instant $t_k$, un premier algorithme d'estimation d'une nouvelle valeur $P^i_k$ de la donnée, cette exécution comprenant :

        - la réception d'une nouvelle mesure intermédiaire établie par le premier calculateur pour cet instant $t_k$, cette nouvelle mesure intermédiaire étant plus récente que la mesure intermédiaire reçue lors de la précédente exécution du premier algorithme, puis
        - l'estimation de la nouvelle valeur $P^i_k$ de la donnée à partir de la nouvelle mesure intermédiaire reçue,

    • à un instant $t_1$, arrêter de la phase active et passer dans une phase d'indisponibilité qui dure plusieurs instants $t_k$ et pendant laquelle l'exécution par le deuxième calculateur du premier algorithme est inhibée,

- le premier calculateur est programmé pour, pendant la phase d'indisponibilité :

    • continuer à acquérir, à chaque instant $t_a$, les nouvelles mesures de la grandeur physique réalisées par le capteur électronique pendant cette phase d'indisponibilité,

**caractérisé en ce que** :

- le premier calculateur (15) est également programmé pour, pendant la phase d'indisponibilité :

    • relever des caractéristiques du signal mesuré par le capteur électronique à partir de ces nouvelles mesures acquises pendant cette phase d'indisponibilité, et

• enregistrer ces caractéristiques, le nombre de caractéristiques relevées pendant la phase d'indisponibilité étant strictement inférieur au nombre de mesures intermédiaires qu'établit, lors de la phase active, le premier calculateur pendant une période de même durée que cette phase d'indisponibilité de sorte que le premier calculateur réalise ainsi, pendant la phase d'indisponibilité, une deuxième compression des mesures dudit au moins un capteur avec un taux de compression plus élevé que lors de la phase active , et

- le deuxième calculateur (14) est également programmé pour :

• à un instant $t_2$, arrêter la phase d'indisponibilité et passer dans une phase de réveil actif lors de laquelle il exécute un second algorithme d'estimation d'une valeur $P^i_w$ de la donnée à un instant $t_w$ compris dans l'intervalle $]t_1 ; t_2]$ à partir des caractéristiques relevées et enregistrées pendant la phase d'indisponibilité par le premier calculateur, puis
• arrêter de la phase de réveil actif et retourner à la phase active.

15. Appareil directement transportable à la main par un être humain, cet appareil comportant au moins un capteur électronique (22) apte à mesurer une grandeur physique, **caractérisé en ce que** l'appareil comporte aussi une unité électronique (11) conforme à la revendication 14, cette unité électronique étant raccordée à ce capteur électronique.

**Patentansprüche**

1. Verfahren zur Verarbeitung der Messungen von mindestens einem elektronischen Sensor in einer tragbaren Vorrichtung eines Benutzers, um daraus die Werte eines Datenelements zu zeitlich aufeinander folgenden Zeitpunkten abzuleiten, wobei:

- während einer aktiven Phase:

- ein erster Rechner zu den Zeitpunkten $t_a$ die Messungen von dem mindestens einen elektronischen Sensor erfasst (104), anschließend auf Grundlage der zu den Zeitpunkten $t_a$ erfassten Messungen zu jedem Zeitpunkt tk eine Zwischenmessung ermittelt (108), wobei über einen gleichen Zeitraum die Zeitpunkte $t_k$ weniger zahlreich als die Zeitpunkte $t_a$ sind, sodass der erste Rechner auf diese Weise während der aktiven Phase eine erste Komprimierung der Messungen von dem mindestens einen Sensor durchführt,
- ein zweiter Rechner zu jedem Zeitpunkt tk einen ersten Algorithmus zur Schätzung eines neuen Werts $P^i_k$ des Datenelements ausführt (122; 290), wobei diese Ausführung Folgendes beinhaltet:

• Empfang (124) einer neuen, von dem ersten Rechner für diesen Zeitpunkt $t_k$ ermittelten Zwischenmessung, wobei diese neue Zwischenmessung jünger als die Zwischenmessung ist, die während der vorhergehenden Ausführung des ersten Algorithmus empfangen wurde, anschließend
• Schätzung (126 - 132) des neuen Werts $P^i_k$ des Datenelements auf Grundlage der neuen empfangenen Zwischenmessung,

- zu einem Zeitpunkt $t_1$, Stoppen der aktiven Phase und Übergang zu einer Nichtverfügbarkeitsphase, die mehrere Zeitpunkte tk dauert und während der die Ausführung des ersten Algorithmus durch den zweiten Rechner verhindert wird,
- während der Nichtverfügbarkeitsphase der erste Rechner fortfährt, zu jedem Zeitpunkt $t_a$ die Messungen der physikalischen Größe, die von dem elektronischen Sensor während dieser Nichtverfügbarkeitsphase durchgeführt werden, zu erfassen (102; 280),

**dadurch gekennzeichnet, dass**:

- der erste Rechner während der Nichtverfügbarkeitsphase:

• auf Grundlage dieser neuen Messungen, die während dieser Nichtverfügbarkeitsphase erfasst werden, Kenndaten des von dem elektronischen Sensor gemessenen Signals aufnimmt (114; 284) und
• diese Kenndaten aufzeichnet (114; 284), wobei die Anzahl von während der Nichtverfügbarkeitsphase aufgenommenen Kenndaten in jedem Fall kleiner als die Anzahl von Zwischenmessungen ist, die der erste Rechner während der aktiven Phase über einen Zeitraum, der die gleiche Dauer wie diese Nichtverfügbarkeitsphase hat, ermittelt, sodass der erste Rechner auf diese Weise während der Nichtverfügbarkeitsphase eine zweite Komprimierung der Messungen von dem mindestens einen Sensor mit einem Komprimierungsverhältnis, das höher als während der aktiven Phase ist, durchführt,

- zu einem Zeitpunkt $t_2$, Stoppen der Nichtverfügbarkeitsphase und Übergang zu einer aktiven Aufwachphase, während der der zweite Rechner auf Grundlage der während der Nichtverfügbarkeitsphase durch den ersten Rechner aufgenommenen und aufgezeichneten Kenndaten einen zweiten Algorithmus zur Schätzung eines Werts $P^i_w$ des Datenelements zu einem Zeitpunkt $t_w$, der in dem Intervall $]t_1; t_2]$ enthalten ist, ausführt (148), anschließend
- Stoppen der aktiven Aufwachphase und Zurückkehren zur aktiven Phase.

2. Verfahren nach Anspruch 1, wobei:

- während der aktiven Phase die Schätzung (126 - 132) des neuen Werts $P^i_k$ des Datenelements auf Grundlage der neuen empfangenen Zwischenmessung und in Abhängigkeit von den ausschließlich vor dem Zeitpunkt tk empfangenen Zwischenmessungen durchgeführt wird und
- sich während der aktiven Aufwachphase der ausgeführte zweite Algorithmus von dem ersten Algorithmus dahingehend unterscheidet, dass er den Wert $P^i_w$ für einen Zeitpunkt $t_w$, der in dem Intervall $]t_1; t_2[$ enthalten ist, auf Grundlage von Kenndaten, die während der Nichtverfügbarkeitsphase sowohl vor als auch nach dem Zeitpunkt $t_w$ aufgenommen werden, schätzt.

3. Verfahren nach Anspruch 1 oder 2, wobei:

- während der aktiven Phase die Schätzung (126 - 132) des neuen Werts $P^i_k$ des Datenelements auf Grundlage der neuen empfangenen Zwischenmessung und außerdem auf Grundlage des vorhergehenden Werts $P^i_{k-1}$ des Datenelements, der während der vorhergehenden Ausführung des ersten Algorithmus zum Zeitpunkt $t_{k-1}$ geschätzt wurde, durchgeführt wird und
- während der ersten Ausführung des ersten Algorithmus nach dem Stoppen der aktiven Aufwachphase der vorhergehende Wert $P^i_{k-1}$ des Datenelements, der zum Schätzen des neuen Werts $P^i_k$ des Datenelements benötigt wird, auf Grundlage des Werts $P^i_w$, der durch die Ausführung des zweiten Schätzungsalgorithmus während der aktiven Aufwachphase geliefert wird, gebildet wird.

4. Verfahren nach Anspruch 3, wobei:

- der elektronische Sensor eine in die tragbare Vorrichtung integrierte inertiale Einheit beinhaltet und die von dieser inertialen Einheit gemessene physikalische Größe für die Richtung der Bewegung der Vorrichtung und die Amplitude dieser Bewegung zwischen einem vorhergehenden Zeitpunkt $t_{k-1}$ und dem Zeitpunkt tk repräsentativ ist,
- jede Zwischenmessung die Richtung $\theta_k$ und die Amplitude $l_k$ der Bewegung der Vorrichtung zwischen den Zeitpunkten $t_{k-1}$ und tk beinhaltet,
- das Datenelement die Lokalisierung der tragbaren Vorrichtung im Inneren eines Raums ist und jeder Wert des Datenelements mindestens eine mögliche Position $P^i_k$ der Vorrichtung im Inneren dieses Raums beinhaltet,
- der erste und der zweite Schätzungsalgorithmus Algorithmen zur Schätzung mindestens einer möglichen Position $P^i_k$ der Vorrichtung im Inneren dieses Raums sind,
- zu jedem Zeitpunkt tk die Ausführung (122) des ersten Algorithmus durch den zweiten Rechner auf Grundlage mindestens einer möglichen Position $P^i_{k-1}$, die mit Hilfe dieses ersten Algorithmus zum vorhergehenden Zeit-punkt $t_{k-1}$ geschätzt wurde, mindestens eine mögliche Position $P^i_k$ erzeugt,
- vor dem Zeitpunkt $t_1$ auf Grundlage der zum Zeitpunkt tk, der dem Zeitpunkt $t_1$ unmittelbar vorhergeht, erzeugten möglichen Position $P^i_k$ mindestens eine letzte mögliche Position $P^i_{t1}$ gebildet und anschließend aufgezeichnet wird,
- während der Nichtverfügbarkeitsphase die aufgenommenen Kenndaten eine zeitlich geordnete Folge von charakteristischen Punkten einer von der Vorrichtung während der Nichtverfügbarkeitsphase zurückgelegten Strecke beinhalten, wobei diese Folge von charakteristischen Punkten eine Aufnahme der von der Vorrichtung während der Nichtverfügbarkeitsphase zurückgelegten Strecke begründet,
- während der aktiven Aufwachphase die Ausführung (148) des zweiten Algorithmus auf Grundlage der letzten gebildeten Position $P^i_{t1}$ und der während der Nichtverfügbarkeitsphase aufgenommenen zurückgelegten Stre-cke mindestens den Wert $P^i_{t2}$ zum Zeitpunkt $t_2$ schätzt, wobei dieser Wert $P^i_{t2}$ zum Zeitpunkt $t_2$ "Ausgangsposition $P^i_{t2}$" genannt wird, und

- während der ersten Ausführung des ersten Algorithmus nach dem Zeitpunkt $t_2$ die vorhergehende Position $P^i_{k-1}$ auf Grundlage der Ausgangsposition $P^i{t2}$ gebildet wird.

5. Verfahren nach Anspruch 4, wobei:

- zu jedem Zeitpunkt $t_k$ die Ausführung (122) des ersten Algorithmus durch den zweiten Rechner auf Grundlage mehrerer möglicher Positionen $P^i_{k-1}$, die mit Hilfe dieses ersten Algorithmus zum vorhergehenden Zeitpunkt $t_{k-1}$ geschätzt wurden, mehrere mögliche Positionen $P^i_k$ erzeugt,
- vor dem Zeitpunkt $t_1$ auf Grundlage der zum Zeitpunkt tk, der dem Zeitpunkt $t_1$ unmittelbar vorhergeht, erzeugten möglichen Positionen $P^i_k$ mehrere unterschiedliche mögliche Positionen $P^i_{t1}$ gebildet und anschließend aufgezeichnet werden,
- während der aktiven Aufwachphase die Ausführung (148) des zweiten Algorithmus mehrere Ausgangspositionen $P^i_{t2}$ erzeugt, wobei hierfür jede Ausgangsposition $P^i{t2}$ auf Grundlage einer jeweiligen letzten gebildeten Position $P^i_{t1}$ und der während der Nichtverfügbarkeitsphase aufgenommenen zurückgelegten Strecke geschätzt wird, und
- während der ersten Ausführung des ersten Algorithmus nach dem Zeitpunkt $t_2$ jede vorhergehende Position $P^i_{k-1}$ auf Grundlage einer jeweiligen möglichen Ausgangsposition $P^i_{t2}$ gebildet wird.

6. Verfahren nach Anspruch 5, wobei die Bildung der mehreren letzten Ausgangspositionen $P^i_{t1}$ Folgendes beinhaltet:

- Auswahl (198) von M wahrscheinlichsten Positionen der Vorrichtung auf Grundlage von Gewichten, die mit den geschätzten Positionen $P^i_k$, die zum Zeitpunkt tk, der dem Zeitpunkt $t_1$ unmittelbar vorhergeht, erzeugt werden, assoziiert sind, wobei M eine ganze Zahl ist, die größer als zwei und in jedem Fall kleiner als die Anzahl möglicher Positionen $P^i_k$ ist, die durch die Ausführung (122) des ersten Algorithmus zum Zeitpunkt tk, der dem Zeitpunkt $t_1$ unmittelbar vorhergeht, erzeugt werden, und wobei jedes mit einer jeweiligen möglichen Position $P^i_k$ assoziierte Gewicht die Wahrscheinlichkeit, dass sich die Vorrichtung in dieser Position $P^i_k$ befindet, darstellt, anschließend
- Aufzeichnung nur der identifizierten M wahrscheinlichsten Positionen als letzte mögliche Positionen $P^i_{t1}$.

7. Verfahren nach Anspruch 4 oder 5, wobei die Ausführung (148) des zweiten Algorithmus Folgendes beinhaltet:

- Korrektur (228) der während der Nichtverfügbarkeitsphase zurückgelegten Strecke mit Hilfe eines Satzes vordefinierter Beschränkungen bezüglich der Bewegungen der Vorrichtung im Raum, wobei diese Korrektur Modifikationen der Abstände zwischen den charakteristischen Punkten der aufgenommenen Strecke und Modifikationen der Amplituden der Richtungsänderungen hinsichtlich dieser charakteristischen Punkte der aufgenommenen Strecke beinhaltet, um eine korrigierte Strecke zu erhalten, die gegen keine der vordefinierten Beschränkungen verstößt, wobei jede Modifikation unter Berücksichtigung der sowohl vor als auch hinter dem charakteristischen Punkt gelegenen charakteristischen Punkte, die von dieser Modifikation des Abstands oder der Amplitude der Richtungsänderung betroffen sind, durchgeführt wird, anschließend
- Bildung (252) der Schätzung der Ausgangsposition $P^i_{t2}$, die Folgendes beinhaltet:

  • Positionierung des Ursprungs der korrigierten Strecke in Abhängigkeit von der letzten, durch die Ausführung des ersten Algorithmus geschätzten Position $P^i_{t1}$, anschließend
  • Erhalt der Position $P^i_{t2}$ auf Grundlage der Position des Endpunkts der korrigierten Strecke, wenn der Ursprung dieser korrigierten Strecke auf diese Weise positioniert wurde.

8. Verfahren nach Anspruch 4 oder 5, wobei:

- der erste Algorithmus zu jedem Zeitpunkt tk außerdem den Wert eines Korrekturfaktors für eine Messungenauigkeit, die einen der in das Innere der Vorrichtung integrierten Sensoren betrifft, berechnet (126) und
- das Verfahren die Korrektur (200) der während der Nichtverfügbarkeitsphase aufgenommenen zurückgelegten Strecke beinhaltet, um eine korrigierte Strecke zu erhalten, wobei diese Korrektur durchgeführt wird, indem auf die Zwischenmessungen dieses integrierten Sensors der zum Zeitpunkt tk, der dem Zeitpunkt $t_1$ unmittelbar vorhergeht, berechnete Korrekturfaktor angewendet wird, anschließend
- die Position $P^i_{t2}$ unter Verwendung dieser korrigierten Strecke geschätzt wird.

9. Verfahren nach einem der vorhergehenden Ansprüche, wobei:

- der elektronische Sensor eine in die tragbare Vorrichtung integrierte inertiale Einheit beinhaltet und die von dieser inertialen Einheit gemessene physikalische Größe für die Richtung der Bewegung der Vorrichtung und die Amplitude dieser Bewegung zwischen einem vorhergehenden Zeitpunkt $t_{a-1}$ und dem Zeitpunkt $t_a$ repräsentativ ist,

- jede Zwischenmessung die Richtung $\theta_k$ und die Amplitude $l_k$ der Bewegung der Vorrichtung zwischen den Zeitpunkten $t_{k-1}$ und tk beinhaltet,

- das Datenelement die Lokalisierung der tragbaren Vorrichtung im Inneren eines Raums ist und jeder Wert des Datenelements mindestens eine mögliche Position $P^i_k$ der Vorrichtung im Inneren dieses Raums beinhaltet,

- der erste und der zweite Schätzungsalgorithmus Algorithmen zur Schätzung mindestens einer möglichen Position $P^i_k$ der Vorrichtung im Inneren dieses Raums sind,

- während der Nichtverfügbarkeitsphase die aufgenommenen Kenndaten charakteristische Punkte einer von der Vorrichtung während dieser Nichtverfügbarkeitsphase zurückgelegten Strecke beinhalten, wobei die Aufnahme (114) der Kenndaten des gemessenen Signals diesbezüglich Folgendes beinhaltet:

　　• Identifikation, auf Grundlage der neuen, von dem ersten Rechner während der Nichtverfügbarkeitsphase ermittelten Zwischenmessungen, von charakteristischen Punkten der Strecke, die weniger zahlreich als die neuen, während der Nichtverfügbarkeitsphase ermittelten Zwischenmessungen sind, und

　　• für jedes Paar von identifizierten, entlang der Strecke aufeinander folgenden charakteristischen Punkten, Approximation der Strecke der Vorrichtung zwischen diesen zwei charakteristischen Punkten durch ein Polynom, dessen Koeffizienten bestimmt sind.

10. Verfahren nach Anspruch 9, wobei die Identifikation von charakteristischen Punkten der Strecke die Identifikation jedes Punkts als charakteristischen Punkt der Strecke beinhaltet, an dem die Amplitude einer Richtungsänderung der Bewegung der Vorrichtung einen vorgegebenen Schwellenwert überschreitet.

11. Verfahren nach Anspruch 10, wobei die Identifikation von charakteristischen Punkten der Strecke jedes Mal, wenn mindestens eine der folgenden Bedingungen erfüllt ist, außerdem die Identifikation eines zusätzlichen charakteristischen Punkts beinhaltet:

　　- der seit dem letzten identifizierten charakteristischen Punkt zurückgelegte Abstand ist größer als ein vorgegebener Schwellenwert,

　　- die Amplitude einer Druckschwankung, die von einem in das Innere der Vorrichtung integrierten Drucksensor gemessen wird, ist größer als ein vorgegebener Schwellenwert,

　　- die Amplitude einer Bewegung der Vorrichtung im Verhältnis zu dem Körper einer Person, die die Vorrichtung manuell transportiert, ist größer als ein vorgegebener Schwellenwert oder

　　- die seit dem letzten identifizierten charakteristischen Punkt verstrichene Zeit ist größer als ein vorgegebener Schwellenwert.

12. Verfahren nach einem der Ansprüche 4 bis 8, wobei der erste Algorithmus, wenn er von dem zweiten Rechner ausgeführt wird, die Position $P^i_k$ der Vorrichtung schätzt (126 - 132), indem er für die Bewegungen der Vorrichtung im Raum einen Satz vordefinierter Beschränkungen verwendet.

13. Informationsaufzeichnungsmedium (12), **dadurch gekennzeichnet, dass** es Anweisungen zum Ausführen eines Verfahrens nach einem der vorhergehenden Ansprüche beinhaltet, wenn diese Anweisungen von einem elektronischen Rechner ausgeführt werden.

14. Elektronische Einheit zur Verarbeitung der Messungen von mindestens einem elektronischen Sensor, um daraus die Werte eines Datenelements zu zeitlich aufeinander folgenden Zeitpunkten abzuleiten, wobei diese Einheit mindestens einen ersten und einen zweiten elektronischen Rechner (14, 15) beinhaltet, wobei:

　　- der erste Rechner (15) programmiert ist, um während einer aktiven Phase zu den Zeitpunkten $t_a$ die Messungen von dem mindestens einen elektronischen Sensor zu erfassen und anschließend auf Grundlage der zu den Zeitpunkten $t_a$ erfassten Messungen zu jedem Zeitpunkt $t_k$ eine Zwischenmessung zu ermitteln, wobei über einen gleichen Zeitraum die Zeitpunkte tk weniger zahlreich als die Zeitpunkte $t_a$ sind, sodass der erste Rechner auf diese Weise während der aktiven Phase eine erste Komprimierung der Messungen von dem mindestens einen Sensor durchführt,

　　- der zweite Rechner (14) für Folgendes programmiert ist:

- Ausführen, während einer aktiven Phase, zu jedem Zeitpunkt $t_k$, eines ersten Algorithmus zur Schätzung eines neuen Werts $P^i_k$ des Datenelements, wobei diese Ausführung Folgendes beinhaltet:

 - Empfang einer neuen, von dem ersten Rechner für diesen Zeitpunkt $t_k$ ermittelten Zwischenmessung, wobei diese neue Zwischenmessung jünger als die Zwischenmessung ist, die während der vorhergehenden Ausführung des ersten Algorithmus empfangen wurde, anschließend
 - Schätzung des neuen Werts $P^i_k$ des Datenelements auf Grundlage der neuen empfangenen Zwischenmessung,

 - zu einem Zeitpunkt $t_1$, Stoppen der aktiven Phase und Übergang zu einer Nichtverfügbarkeitsphase, die mehrere Zeitpunkte $t_k$ dauert und während der die Ausführung des ersten Algorithmus durch den zweiten Rechner verhindert wird,

- der erste Rechner für Folgendes während der Nichtverfügbarkeitsphase programmiert ist:

 - Fortfahren, zu jedem Zeitpunkt $t_a$, die neuen Messungen der physikalischen Größe, die von dem elektronischen Sensor während dieser Nichtverfügbarkeitsphase durchgeführt werden, zu erfassen,

**dadurch gekennzeichnet, dass**:

- der erste Rechner (15) außerdem für Folgendes während der Nichtverfügbarkeitsphase programmiert ist:

 - auf Grundlage dieser neuen Messungen, die während dieser Nichtverfügbarkeitsphase erfasst werden, Aufnehmen von Kenndaten des von dem elektronischen Sensor gemessenen Signals und
 - Aufzeichnen dieser Kenndaten, wobei die Anzahl von während der Nichtverfügbarkeitsphase aufgenommenen Kenndaten in jedem Fall kleiner als die Anzahl von Zwischenmessungen ist, die der erste Rechner während der aktiven Phase über einen Zeitraum, der die gleiche Dauer wie diese Nichtverfügbarkeitsphase hat, ermittelt, sodass der erste Rechner auf diese Weise während der Nichtverfügbarkeitsphase eine zweite Komprimierung der Messungen von dem mindestens einen Sensor mit einem Komprimierungsverhältnis, das höher als während der aktiven Phase ist, durchführt, und

- der zweite Rechner (14) außerdem für Folgendes programmiert ist:

 - zu einem Zeitpunkt $t_2$, Stoppen der Nichtverfügbarkeitsphase und Übergang zu einer aktiven Aufwachphase, während der er auf Grundlage der während der Nichtverfügbarkeitsphase durch den ersten Rechner aufgenommenen und aufgezeichneten Kenndaten einen zweiten Algorithmus zur Schätzung eines Werts $P^i_w$ des Datenelements zu einem Zeitpunkt $t_w$, der in dem Intervall $]t_1; t_2]$ enthalten ist, ausführt, anschließend
 - Stoppen der aktiven Aufwachphase und Zurückkehren zur aktiven Phase.

**15.** Von einem Menschen direkt von Hand transportierbare Vorrichtung, wobei diese Vorrichtung mindestens einen elektronischen Sensor (22) beinhaltet, der fähig ist, eine physikalische Größe zu messen, **dadurch gekennzeichnet, dass** die Vorrichtung auch eine elektronische Einheit (11) nach Anspruch 14 beinhaltet, wobei diese elektronische Einheit mit diesem elektronischen Sensor verbunden ist.

**Claims**

**1.** Method for processing the measurements of at least one electronic sensor, housed in a portable device by a user, so as to deduce therefrom the values of a datum at successive instants over time, in which:

- during an active phase:

 - a first calculator acquires (104), at instants $t_a$, the measurements of said at least one electronic sensor, and then establishes (108), at each instant $t_k$ an intermediate measurement on the basis of the measurements acquired at the instants $t_a$, over one and the same time period the instants tk being less numerous than the instants $t_a$ so that the first calculator thus carries out, during the active phase, a first compression of the measurements of said at least one sensor,
 - at each instant $t_k$, a second calculator executes (122; 290) a first algorithm for estimating a new value $P^i_k$

of the datum, this execution comprising:

• the reception (124) of a new intermediate measurement established by the first calculator for this instant $t_k$, this new intermediate measurement being more recent than the intermediate measurement received during the previous execution of the first algorithm, and then
• the estimation (126 - 132) of the new value $P^i_k$ of the datum on the basis of the new intermediate measurement received,

- at an instant $t_1$, the stopping of the active phase and the switch to an unavailability phase which lasts several instants $t_k$ and during which the execution by the second calculator of the first algorithm is inhibited,
- during the unavailability phase, the first calculator continues to acquire (102; 280), at each instant $t_a$, the measurements of the physical quantity carried out by the electronic sensor during this unavailability phase,

**characterized in that**:

- during the unavailability phase, the first calculator:

• logs (114; 284) characteristics of the signal measured by the electronic sensor on the basis of these new measurements acquired during this unavailability phase, and
• records (114; 284) these characteristics, the number of characteristics logged during the unavailability phase being strictly less than the number of intermediate measurements that are established, during the active phase, by the first calculator for a period of the same duration as this unavailability phase so that the first calculator thus carries out, during the unavailability phase, a second compression of the measurements of said at least one sensor with a higher compression rate than during the active phase,

- at an instant $t_2$, the stopping of the unavailability phase and the switch to an active-wakeup phase during which the second calculator executes (148) a second algorithm for estimating a value $P^i_w$ of the datum at an instant $t_w$ included in the interval $]t_1; t_2]$ on the basis of the characteristics logged and recorded during the unavailability phase by the first calculator, and then
- the stopping of the active-wakeup phase and the return to the active phase.

2. Method according to Claim 1, in which:

- during the active phase, the estimation (126 - 132) of the new value $P^i_k$ of the datum is carried out on the basis of the new intermediate measurement received and as a function of the intermediate measurements received solely before the instant $t_k$, and
- during the active-wakeup phase, the second algorithm executed is different from the first algorithm in that it estimates the value $P^i_w$ for an instant $t_w$ included in the interval $]t_1; t_2[$ on the basis of characteristics logged during the unavailability phase both before and after the instant $t_w$.

3. Method according to Claim 1 or 2, in which:

- during the active phase, the estimation (126 - 132) of the new value $P^i_k$ of the datum is carried out on the basis of the new intermediate measurement received and also on the basis of the previous value $P^i_{k-1}$ of the datum estimated during the previous execution of the first algorithm at the instant $t_{k-1}$, and
- during the first execution of the first algorithm after the stopping of the active-wakeup phase, the previous value $P^i_{k-1}$ of the datum required to estimate the new value $P^i_k$ of the datum is constructed on the basis of the value $P^i_w$ provided by the execution of the second estimation algorithm during the active-wakeup phase.

4. Method according to Claim 3, in which:

- the electronic sensor comprises an inertial platform onboard the portable device and the physical quantity measured by this inertial platform is representative of the direction of movement of the device and of the amplitude of this displacement between a previous instant $t_{k-1}$ and the instant $t_k$,
- each intermediate measurement comprises the direction $\theta_k$ and the amplitude $l_k$ of the displacement of the device between the instants $t_{k-1}$ and $t_k$,
- the datum is the location of the portable device inside a space and each value of the datum comprises at least one possible position $P^i_k$ of the device inside this space,

- the first and the second estimation algorithms are algorithms for estimating at least one possible position $P^i_k$ of the device inside this space,
- at each instant tk, the execution (122) of the first algorithm, by the second calculator, generates at least one possible position $P^i_k$ on the basis of at least one possible position $P^i_{k-1}$ estimated with the aid of this first algorithm at the previous instant $t_{k-1}$,
- before the instant $t_1$, at least one last possible position $P^i_{t1}$ is constructed on the basis of the possible position $P^i_k$ generated at the instant tk immediately preceding the instant $t_1$, and then recorded,
- during the unavailability phase, the logged characteristics comprise a temporally ordered series of characteristic points of a path traveled by the device during the unavailability phase, this series of characteristic points constituting a logging of the path traveled by the device during the unavailability phase,
- during the active-wakeup phase, the execution (148) of the second algorithm estimates at least the value $P^i_{t2}$ at the instant $t_2$ on the basis of the last constructed position $P^i_{t1}$ and of the path traveled logged during the unavailability phase, this value $P^i_{t2}$ at the instant $t_2$ being called the "initial position $P^i_{t2}$", and
- during the first execution of the first algorithm after the instant $t_2$, the previous position $P^i_{k-1}$ is constructed on the basis of the initial position $P^i_{t2}$.

5. Method according to Claim 4, in which:

- at each instant $t_k$, the execution (122) of the first algorithm, by the second calculator, generates several possible positions $P^i_k$ on the basis of several possible positions $P^i_{k-1}$ estimated with the aid of this first algorithm at the previous instant $t_{k-1}$,
- before the instant $t_1$, several different possible positions $P^i_{t1}$ are constructed on the basis of the possible positions $P^i_k$ generated at the instant $t_k$ immediately preceding the instant $t_1$, and then recorded,
- during the active-wakeup phase, the execution (148) of the second algorithm generates several initial positions $P^i_{t}2$, accordingly each initial position $P^i_{t}2$ is estimated on the basis of a last respective constructed position $P^i_{t1}$ and of the path traveled logged during the unavailability phase, and
- during the first execution of the first algorithm after the instant t2, each previous position $P^i_{k-1}$ is constructed on the basis of a respective possible initial position $P^i_{t2}$.

6. Method according to Claim 5, in which the construction of said several last initial positions $P^i_{t1}$ comprises:

- the selection (198) of M most probable positions of the device on the basis of weights associated with the estimated positions $P^i_k$ generated at the instant tk immediately preceding the instant $t_1$, where M is an integer greater than two and strictly less than the number of possible positions $P^i_k$ generated by the execution (122) of the first algorithm at the instant $t_k$ immediately preceding the instant $t_1$, and each weight associated with a respective possible position $P^i_k$ represents the probability that the device is situated in this position $P^i_k$, and then
- the recording as last possible positions $P^i_{t1}$ of only the M most probable positions identified.

7. Method according to Claim 4 or 5, in which the execution (148) of the second algorithm comprises:

- the correction (228) of the path logged during the unavailability phase with the aid of a set of predefined constraints on the displacements of the device in the space, this correction comprising modifications of the distances between the characteristic points of the logged path and modifications of the amplitudes of the changes of direction at the level of these characteristic points of the logged path to obtain a corrected path which does not infringe any of the predefined constraints, each modification being carried out while taking account both of the characteristic points situated upstream and also of those situated downstream of the characteristic point affected by this modification of the distance or of the amplitude of the change of direction, and then
- the construction (252) of the estimation of the initial position $P^i_{t2}$ comprises:

  • the positioning of the origin of the corrected path as a function of the last position $P^i_{t1}$ estimated by the execution of the first algorithm, and then
  • the obtaining of the position $P^i_{t2}$ on the basis of the position of the finishing point of the corrected path when the origin of this corrected path has been thus positioned.

8. Method according to Claim 4 or 5, in which:

- at each instant tk, the first algorithm also calculates (126) the value of a corrective factor of a measurement bias affecting one of the onboard sensors embedded inside the device, and

- the method comprises the correction (200) of the path traveled logged during the unavailability phase so as to obtain a corrected path, this correction being carried out by applying to the intermediate measurements arising from this onboard sensor the corrective factor calculated at the instant $t_k$ immediately preceding the instant $t_1$, and then
- the position $P^i_{t2}$ is estimated by using this corrected path.

9. Method according to any one of the preceding claims, in which:

- the electronic sensor comprises an inertial platform onboard the portable device and the physical quantity measured by this inertial platform is representative of the direction of movement of the device and of the amplitude of this displacement between a previous instant $t_{a-1}$ and the instant $t_a$,
- each intermediate measurement comprises the direction $\theta_k$ and the amplitude $l_k$ of the displacement of the device between the instants $t_{k-1}$ and $t_k$,
- the datum is the location of the portable device inside a space and each value of the datum comprises at least one possible position $P^i_k$ of the device inside this space,
- the first and the second estimation algorithms are algorithms for estimating at least one possible position $P^i_k$ of the device inside this space,
- during the unavailability phase, the characteristics logged comprise characteristic points of a path traveled by the device during this unavailability phase, the logging (114) of the characteristics of the measured signal comprising for this purpose:

• the identification, on the basis of the new intermediate measurements established by the first calculator during the unavailability phase, of characteristic points of the path that are less numerous than the new intermediate measurements established during the unavailability phase, and
• for each pair of successive identified characteristic points along the path, the approximation of the path of the device between these two characteristic points by a polynomial whose coefficients are determined.

10. Method according to Claim 9, in which the identification of characteristic points of the path comprises the identification, as characteristic point of the path, of each point where the amplitude of a change of direction of movement of the device exceeds a predetermined threshold.

11. Method according to Claim 10, in which the identification of characteristic points of the path also comprises the identification of an additional characteristic point each time at least one of the following conditions is satisfied:

- the distance traveled since the last identified characteristic point is greater than a predetermined threshold,
- the amplitude of a pressure variation measured by an onboard pressure sensor embedded inside the device is greater than a predetermined threshold,
- the amplitude of a displacement of the device with respect to the body of a person who is manually transporting the device is greater than a predetermined threshold, or
- the elapsed time since the last identified characteristic point is greater than a predetermined threshold.

12. Method according to any one of Claims 4 to 8, in which, when it is executed by the second calculator, the first algorithm estimates (126 - 132) the position $P^i_k$ of the device by using a set of predefined constraints on the displacements of the device in the space.

13. Information recording medium (12), **characterized in that** it comprises instructions for executing a method in accordance with any one of the preceding claims, when these instructions are executed by an electronic calculator.

14. Electronic unit for processing the measurements of at least one electronic sensor so as to deduce therefrom the values of a datum at successive instants over time, this unit comprising at least one first and one second electronic calculator (14, 15), in which:

- the first calculator (15) is programmed to, during an active phase, acquire, at instants $t_a$, the measurements of said at least one electronic sensor, and then establish, at each instant $t_k$ an intermediate measurement on the basis of the measurements acquired at the instants $t_a$, over one and the same time period, the instants $t_k$ being less numerous than the instants $t_a$ so that the first calculator thus carries out, during the active phase, a first compression of the measurements of said at least one sensor,
- the second calculator (14) is programmed to:

• execute, during the active phase, at each instant tk, a first algorithm for estimating a new value $P^i_k$ of the datum, this execution comprising:

- the reception of a new intermediate measurement established by the first calculator for this instant $t_k$, this new intermediate measurement being more recent than the intermediate measurement received during the previous execution of the first algorithm, and then
- the estimation of the new value $P^i_k$ of the datum on the basis of the new intermediate measurement received,

• at an instant $t_1$, stop from the active phase and switch to an unavailability phase which lasts several instants $t_k$ and during which the execution by the second calculator of the first algorithm is inhibited,

- the first calculator is programmed to, during the unavailability phase:

• continue to acquire, at each instant $t_a$, the new measurements of the physical quantity carried out by the electronic sensor during this unavailability phase,

**characterized in that**:

- the first calculator (15) is also programmed to, during the unavailability phase:

• log characteristics of the signal measured by the electronic sensor on the basis of these new measurements acquired during this unavailability phase, and
• record these characteristics, the number of characteristics logged during the unavailability phase being strictly less than the number of intermediate measurements that are established, during the active phase, by the first calculator for a period of the same duration as this unavailability phase so that the first calculator thus carries out, during the unavailability phase, a second compression of the measurements of said at least one sensor with a higher compression rate than during the active phase, and

- the second calculator (14) is also programmed to:

• at an instant $t_2$, stop the unavailability phase and switch to an active-wakeup phase during which it executes a second algorithm for estimating a value $P^i_w$ of the datum at an instant $t_w$ included in the interval $]t_1; t_2]$ on the basis of the characteristics logged and recorded during the unavailability phase by the first calculator, and then
• stop from the active-wakeup phase and return to the active phase.

15. Device directly transportable in the hand by a human being, this device comprising at least one electronic sensor (22) able to measure a physical quantity, **characterized in that** the device also comprises an electronic unit (11) according to Claim 14, this electronic unit being linked up to this electronic sensor.

Fig. 1

Fig. 2A

Fig. 2B

Fig. 3

Fig. 9

Fig. 10

Fig. 4

Fig. 5

Fig. 6

Fig. 7

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012254878 A1
- WO 2012158441 A
- US 8548738 B1
- FR 1455575
- US 11774488 B
- US 12106921 B
- FR 14050950
- FR 1363723
- US 8548738 B

**Littérature non-brevet citée dans la description**

- **O. WOODMAN et al.** Pedestrian localisation for indoor environments. *ACM,* 2008
- **J. STRAUB.** Pedestrian indoor localisation and tracking using a particule filter combined with a learning accessibility map. *thèse,* Août 2010
- **IVAN SPASSOV.** Algorithm for Map-Aided Autonomous Indoor Pedestrian Positionning and Navigation. *THÈSE,* 23 Novembre 2007
- **B. RISTIC ; S. ARULAMPALAM ; N. GORDON.** Beyond the Kalman Filter, particle filter for tracking applications. *Artech House,* 2004